(19) Europäisches Patentamt
European Patent Office
Office européen des brevets

(11) EP 4 137 536 B1

(12) EUROPEAN PATENT SPECIFICATION

(45) Date of publication and mention of the grant of the patent:
**11.12.2024 Bulletin 2024/50**

(21) Application number: **21788985.6**

(22) Date of filing: **09.04.2021**

(51) International Patent Classification (IPC):
***C08J 5/18*** *(2006.01)* ***C08G 63/672*** *(2006.01)*
***C08G 63/84*** *(2006.01)*

(52) Cooperative Patent Classification (CPC):
(C-Sets available)
**C08G 63/183; C08G 63/672; C08G 63/84;**
**C08J 3/226; C08J 5/18; C08K 5/098; C08K 5/526;**
C08J 2367/02; C08J 2467/02; Y02W 30/80 (Cont.)

(86) International application number:
**PCT/JP2021/015060**

(87) International publication number:
**WO 2021/210512 (21.10.2021 Gazette 2021/42)**

# (54) COPOLYMERIZED POLYESTER RESIN, HEAT-SHRINKABLE FILM, HEAT-SHRINKABLE LABEL, AND PACKAGE

COPOLYMERISIERTES POLYESTERHARZ, WÄRMESCHRUMPFBARE FOLIE, WÄRMESCHRUMPFBARES ETIKETT UND VERPACKUNG

RÉSINE DE POLYESTER COPOLYMÉRISÉE, FILM THERMORÉTRACTABLE, ÉTIQUETTE THERMORÉTRACTABLE, ET EMBALLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2020 JP 2020073004**

(43) Date of publication of application:
**22.02.2023 Bulletin 2023/08**

(73) Proprietor: **TOYOBO CO., LTD.**
**Osaka-shi, Osaka 530-0001 (JP)**

(72) Inventors:
- **NAKAGAWA, Satoru**
  **Tsuruga-shi, Fukui 914-8550 (JP)**
- **UOTANI, Kosuke**
  **Tsuruga-shi, Fukui 914-8550 (JP)**
- **KANETAKA, Shinya**
  **Osaka-shi, Osaka 530-8230 (JP)**

(74) Representative: **Müller-Boré & Partner Patentanwälte PartG mbB**
**Friedenheimer Brücke 21**
**80639 München (DE)**

(56) References cited:
**WO-A1-2015/060335**
**WO-A1-2018/198845**
**WO-A1-2020/080051**
**WO-A1-2020/090720**
**JP-A- 2008 001 854**
**JP-A- 2008 013 664**
**US-B2- 9 868 815**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 137 536 B1

(52) Cooperative Patent Classification (CPC): (Cont.)

C-Sets
**C08K 5/098, C08L 67/02;**
**C08K 5/526, C08L 67/02**

## Description

### Technical Field

The present invention relates to a copolymerized polyester resin which is suitable for a use as a heat-shrinkable label and which is excellent in the recycling property, and also relates to a heat-shrinkable film, a heat-shrinkable label and a packaged product using the same.

### Background Art

In a use as a label package, a cap seal, an assembling packaging, etc. acting both as a protector of glass bottles, plastic bottles or the like and as an indicator of products, a heat-shrinkable polyester-based film which exhibits high heat resistance, easy burning, and excellent solvent resistance has been widely used as a shrinking label in recent years. A use amount thereof tends to increase as a result of an increase in PET (polyethylene terephthalate) bottle containers, etc.

As a heat-shrinkable polyester-based film, a film which greatly shrinks in a widthwise direction has been widely utilized up to now. In addition, in order to make a finish after shrinking better, a film wherein a shrinking rate in a lengthwise direction which is a non-shrinking direction is adjusted to be minus (i.e., a film which stretches by heating) has been also known (see Patent Document 1).

In the heat-shrinkable polyester-based film, it has been proposed to adjust the shrinking rate to be high in order to deal with various containers (see Patent Documents 2 and 3). However, in such film having high shrinking rate, there are problems that a natural shrinking rate after being stored at an ordinary temperature (after an aging) becomes high, and that a heat-shrinking rate in hot water measured at 70°C lowers. In Patent Document 2, the natural shrinking rate is improved by adopting a preparation method wherein the film is subjected to a biaxial stretch, and to a strengthening of cooling after a biaxial orientation and a longitudinal stretch. However, there is no consideration in Patent Document 2 on the heat-shrinking rates in hot water measured at 70°C before and after the aging. For example, in Patent Document 3, although the natural shrinking rate has been improved, technical findings concerning the improvement in the natural shrinking rate are not disclosed. In addition, values of the shrinking rates at 70°C before and after the aging are not considered. When a decrease in the shrinking rate at 70°C is large, initial shrinking rates in conducting the shrinking are different before and after the aging whereby there is resulted a problem that a finish after shrinking becomes bad. Particularly, in a shrinking apparatus using a hot air having low heat transfer coefficient, there are resulted problems of an insufficient shrinking and a distortion of labels upon finishing if the initial shrinking rates by hot air are different before and after the aging.

In order to solve these problems, there is proposed a copolymerized polyester raw material for film containing terephthalic acid as a main component of a dicarboxylic acid component, containing ethylene glycol as a main component of a diol component, and containing specific amounts of neopentyl glycol and diethylene glycol, wherein intrinsic viscosity and melt viscosity of the material are set to be within specific ranges (see Patent Document 4). This copolymerized polyester raw material can reduce the problems of the natural shrinking rate during film preparation and the heat-shrinking rate in hot water measured at 70°C. However, a decomposition reaction is apt to take place and thus heat resistance is bad as compared with PET due to the copolymerization of diethylene glycol which causes the lowering of thermal stability of the resin. Accordingly, there is yet some room for improvement in a recycling property therein.

Further, the resin proposed in Patent Document 4 is produced by polymerization using an antimony catalyst system, and is low in thermal stability. Accordingly, there was a problem in recyclability of recovered waste generated in a step of preparing a heat-shrinkable film. Patent Document 5, col.1, 1.5-10 relates to a copolymerized polyester resin. More specifically, the present invention relates to a copolymerized polyester resin having excellent transparency, containing little contaminants, and having a high degree of clarification. Claims 8 and 9 disclose heat-shrinkable films prepared from the copolyester of D1.

### Prior Art Documents

#### Patent Documents

Patent Document 1: Japanese Patent Pregrant Publication (JP-B) No. 33895/93
Patent Document 2: Japanese Patent No. 4411556
Patent Document 3: Japanese Patent No. 5249997
Patent Document 4: Japanese Patent No. 6607473

Patent Document 5: US 9 868 815 B2

Disclosure of the Invention

Problem that the Invention is to Solve

The present invention has been done for solving the problems as such in the prior art. The object of the present invention is to provide a copolymerized polyester resin which can give film characteristics being suitable for a use as a heat-shrinkable label (i.e. a film which exhibits a high heat-shrinking rate in a main shrinking direction, and which exhibits a small natural shrinking rate and small changes in the shrinking rate even if the film is subjected to an aging treatment) and which is excellent in the recycling property, and also to provide a heat-shrinkable film, a heat-shrinkable label and a packaged product using the same.

Means for Solving the Problem

In order to achieve such objects, the inventors have conducted extensive investigations about the means particularly for solving the problems of Patent Document 4. Then, the inventors reached an idea that, because of the low thermal stability of the resin in the invention of Patent Document 4, the resin is deteriorated by heating of the resin upon the film preparation whereby the intrinsic viscosity of the film is greatly lowered. After that, the inventors reached an idea of changing a type of catalyst used for polymerization of the resin in order to enhance the thermal stability of the resin. And the inventors have found that, when a combination of aluminum compound and phosphorus compound is used instead of an antimony compound used as the polymerization catalyst in Patent Document 4, the thermal stability of the resin can be enhanced and, further, such combination is also excellent in terms of an activity as the polymerization catalyst. Accordingly, the inventors have found that the intrinsic viscosity of the resulting film is not greatly lowered even if the intrinsic viscosity of the resin is lowered for making the film-preparation speed high and, as a result, that the film-preparation cost can be reduced without causing any problem in the film-preparation property and the film strength.

Further, the inventors have found that using 3,5-di-tert-butyl-4-hydroxybenzylphosphonic acid-based compound as the phosphorus compound causes an elimination reaction of a tert-butyl group in a polymerization step for the copolymerized polyester resin, whereby the effect of improving the thermal stability of the resin is decreased, but by setting the temperature of a final polymerization tank to a preferable range when the copolymerized polyester resin is produced by continuous polymerization, the elimination reaction of a tert-butyl group can be inhibited and the effect of improving the thermal stability of the resin is not significantly decreased. The inventors have thus completed the present invention.

The present invention has been achieved on the basis of the above findings and has the constituent features of the following [1] to [9] .

[1] A copolymerized polyester resin which contains dicarboxylic acid and diol as constituting components, wherein the copolymerized polyester resin contains terephthalic acid as a main component of a dicarboxylic acid component, and contains ethylene glycol as a main component of a diol component, wherein a content of neopentyl glycol is from 18 to 32% by mole and a content of diethylene glycol is from 7 to 15% by mole when a total amount of the whole diol component is taken as 100% by mole, and wherein a molar proportion of each phosphorus compound contained in the copolymerized polyester resin and having a structure of the following residue A, the following residue B, or the following residue C satisfies the following inequality (1).

(1) Residue A (mol%)/[residue B + residue C] (mol%) > 0.5

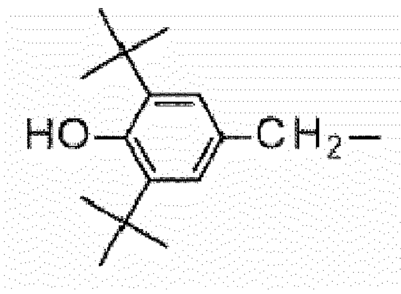
(residue A)

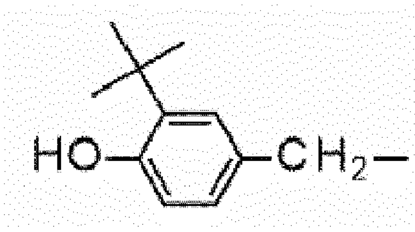

(residue B)

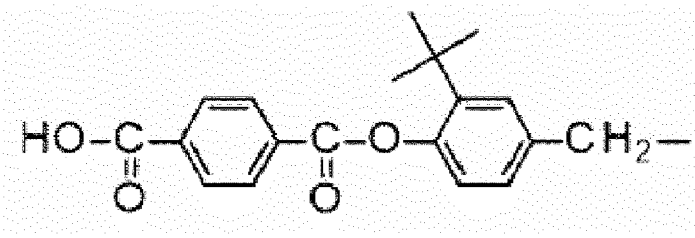

(residue C)

[2] The copolymerized polyester resin according to [1], wherein the copolymerized polyester resin contains aluminum atom and phosphorus atom, wherein a content of the aluminum atom in the copolymerized polyester resin is 15 to 40 ppm, and wherein a molar ratio of the phosphorus atom to the aluminum atom in the copolymerized polyester resin is 1.8 to 2.6.

[3] A method for producing the copolymerized polyester resin according to [1] or [2], wherein an aluminum compound and 3,5-di-tert-butyl-4-hydroxybenzylphosphonic acid-based compound are used as catalysts.

[4] The method for producing the copolymerized polyester resin according to [3], wherein the copolymerized polyester resin is produced by a continuous polymerization method, and wherein the temperature of a final polymerization tank is set to 270 to 280°C in a production process.

[5] A heat-shrinkable film containing a copolymerized polyester resin, an antiblocking agent and an electrostatic adherence imparting agent, wherein the copolymerized polyester resin contains terephthalic acid as a main component of a dicarboxylic acid component, and contains ethylene glycol as a main component of a diol component, wherein a content of neopentyl glycol is from 18 to 32% by mole and a content of diethylene glycol is from 7 to 15% by mole when a total amount of the whole diol component is taken as 100% by mole, and wherein a molar proportion of each phosphorus compound contained in the heat-shrinkable film and having a structure of the following residue A, the following residue B, or the following residue C satisfies the following inequality (1).

(1) Residue A (mol%)/[residue B + residue C] (mol%) > 0.5

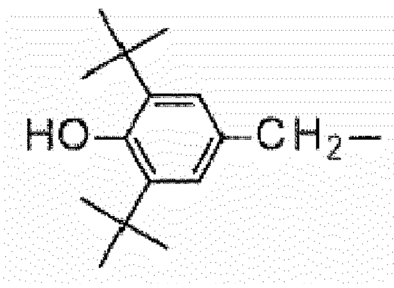

(residue A)

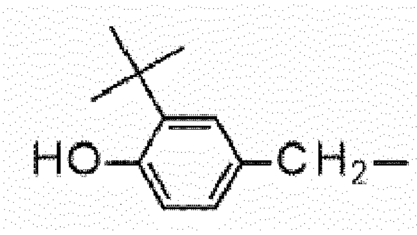

(residue B)

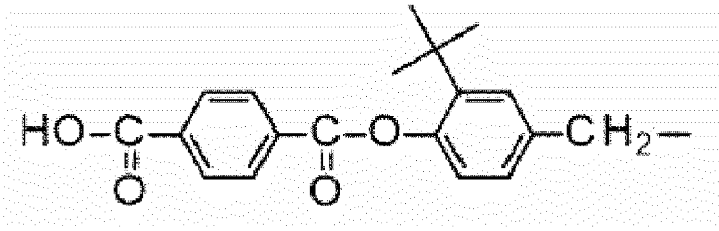
(residue C)

[6] A heat-shrinkable film which is characterized in being made of a polyester resin composition containing the copolymerized polyester resin according to [1] or [2], an antiblocking agent, and an electrostatic adherence imparting agent.
[7] A heat-shrinkable label which is characterized in being prepared by using the heat-shrinkable film according to [5] or [6] .
[8] A packaged product which is characterized in being formed by coating the heat-shrinkable label according to [7] at least on a part of an outer periphery of a target to be packaged followed by subjecting to a heat-shrinking treatment.
Advantages of the Invention

The copolymerized polyester resin according to the present invention is formed of specific copolymerization components, is produced using an aluminum compound and a phosphorus compound as polymerization catalysts, and has high thermal stability due to having a high content of a phosphorus compound having a specific residue structure. The heat-shrinkable film obtained by forming the copolymerized polyester resin into a film has excellent heat shrinkability and thermal stability. Recovery waste generated in a step of preparing the heat-shrinkable film can be recycled. Therefore, the costs for preparing the film can be reduced.
Also, the packaged product which is packaged with a label prepared from the heat-shrinkable film of the present invention can exhibit a beautiful appearance.

Best Mode for Carrying Out the Invention

Hereinafter, the heat-shrinkable film of the present invention and the copolymerized polyester resin used therefor will be described in detail. As will be mentioned in detail later, a heat-shrinkable film is usually prepared by conveying and stretching a film by using a roll or the like. At that time, a conveying direction of the film is called a lengthwise direction and an orthogonal direction to the above lengthwise direction is called a widthwise direction of the film. Accordingly, the widthwise direction of the heat-shrinkable film shown below is a direction which is vertical to an unwinding direction of the roll while the lengthwise direction of the film is a direction which is parallel to the unwinding direction the roll.
One of the means for preparing a more highly-shrinkable film is a means to increase an amount of a monomer component constituting the unit which can become an amorphous component in the film (hereinafter, it will be referred to just as an amorphous component) . In a film prepared by a conventional transversely uniaxial stretch method, when the amount of the amorphous component is increased, the shrinking rate increases proportionally thereto. However, when the amount of the amorphous component is simply increased, it has been found that, although the high shrinking is possible thereby, there are resulted disadvantages such as that the natural shrinking rate increases and the shrinking rate measured at a low temperature of about 70°C lowers after the aging. It has been also found that, when the amount of the amorphous component is increased, an unevenness in the thickness becomes worse and an appearance of the film product roll is deteriorated. Under such circumstances, the inventors have paid their attention to diethylene glycol.
When an amount of diethylene glycol increases, heat resistance becomes bad and discharge of foreign matters increases in a melt extrusion. Therefore, diethylene glycol has not been positively used up to now. However, the present inventors found that, when diethylene glycol is used as a constituting unit of a copolymerized polyester resin, stretching stress during stretch of a film lowers and, in addition, a decrease in the shrinking rate after the aging being measured at a low temperature of about 70°C can be suppressed.
The copolymerized polyester resin according to the present invention is a copolymerized polyester resin which contains dicarboxylic acid and diol as constituting components, and contains an ethylene terephthalate unit as a main component. To be more specific, in all of the resin components, terephthalic acid is used as a main component of a dicarboxylic acid component and ethylene glycol is used as a main component of a diol component. Hereinabove, the "main component" in the dicarboxylic acid component or in the diol component means that it occupies 50% by mole or more in each of the components. Preferably, it occupies 60% by mole or more, and more preferably, it occupies to be 70% by mole or more.
As to other dicarboxylic acid components constituting the copolymerized polyester resin of the present invention other than terephthalic acid, there are exemplified an aromatic dicarboxylic acid such as isophthalic acid, orthophthalic

acid and 2,6-naphthalene dicarboxylic acid, an aliphatic dicarboxylic acid such as adipic acid, azelaic acid, sebacic acid and decanedicarboxylic acid and an alicyclic dicarboxylic acid such as 1,4-cyclohexanedicarboxylic acid. In the present invention, it is preferred that terephthalic acid occupies 70% by mole or more, preferably 80% by mole or more, and further preferably 90% by mole or more, in the dicarboxylic acid component taken as 100% by mole. It is particularly preferred that no dicarboxylic acid component other than terephthalic acid is contained therein.

Hereunder, an interpretation for a phrase "can become an amorphous component" mentioned above will be explained in detail. An "amorphous polymer" specifically stands for a polymer which does not show endothermic peak by melting in a measurement using a DSC (differential scanning colorimeter). In the amorphous polymer, crystallization does not substantially proceed. Accordingly, the amorphous polymer cannot assume a crystalline state or, even if crystallized, its degree of crystallization is very low. A "crystalline polymer" stands for a polymer which is not the above "amorphous polymer". That is, the "crystalline polymer" stands for a polymer which shows endothermic peak by melting in the measurement using a DSC. The crystalline polymer is such a one which can be crystallized when the polymer is heated, or which can become crystallized, or is crystallized already.

Generally speaking, when a polymer being in such a state wherein many monomer units are bonded satisfies various conditions such as that stereoregularity of the polymer is low, symmetry of the polymer is bad, side chain of the polymer is big, branching of the polymer is abundant, or intermolecular cohesive force among polymers is small, it becomes an amorphous polymer. However, depending upon an existing state, there may be a case wherein crystallization well proceeds to result in a crystalline polymer. For example, even if a polymer has a big side chain, when the polymer is constituted from a single monomer unit, there may be a case wherein crystallization well proceeds to result in a crystalline polymer. Therefore, even if a polymer is resulted from the same monomer unit, the polymer may become crystalline or amorphous. Accordingly, in the above description, an expression "a unit derived from a monomer which can become an amorphous component" is used.

Here, an expression "a monomer unit" used in the present invention stands for a repeating unit constituting a polymer, which unit is derived from one polyhydric alcohol molecule and one polycarboxylic acid molecule.

When a monomer unit (an ethylene terephthalate unit) consisting of terephthalic acid and ethylene glycol is a main monomer unit constituting a polymer, there are exemplified a monomer unit consisting of isophthalic acid and ethylene glycol, a monomer unit consisting of terephthalic acid and neopentyl glycol, a monomer unit consisting of terephthalic acid and 1,4-cyclohexanedimethanol and a monomer unit consisting of isophthalic acid and butanediol, as the above unit derived from the monomer which can become the amorphous component.

It is preferred that monocarboxylic acid (such as benzoic acid, lactic acid and glycolic acid) as well as tricarboxylic and higher polycarboxylic acid (such as trimellitic acid, pyromellitic acid and anhydride thereof) are not contained in the copolymerized polyester resin. In a heat-shrinkable film prepared by using the copolymerized polyester resin containing such monocarboxylic acid or polycarboxylic acid, it is difficult to achieve necessary high shrinking rate.

As to a diol component other than the ethylene glycol constituting the copolymerized polyester resin of the present invention, there are exemplified an aliphatic diol such as 1,3-propanediol, 2,2-diethyl-1,3-propanediol, 2-n-butyl-2-ethyl-1,3-propanediol, diisopropyl-1,3-propanediol, 2,2-di-n-butyl-1,3-propanediol, 1,4-butanediol, 1,6-hexanediol, neopentyl glycol, and diethylene glycol; an alicyclic diol such as 1,4-cyclohexanedimethanol; and an aromatic diol such as bisphenol A.

It is necessary that the copolymerized polyester resin according to the present invention contains neopentyl glycol as a diol component. A content of neopentyl glycol is 18% by mole or more, preferably 19% by mole or more, and more preferably 20% by mole or more when the total amount of the whole diol component is taken as 100% by mole. The content of neopentyl glycol is 32% by mole or less, preferably 30% by mole or less, more preferably 29% by mole or less, and further preferably 28% by mole or less when the total amount of the whole diol component is taken as 100% by mole. Due to its branched structure, neopentyl glycol has a role of lowering the stereoregularity of polymer and enhancing the amorphous property thereof. Particularly when the content of neopentyl glycol is increased, there is such a tendency that the shrinking rate increases. When the content of neopentyl glycol is less than the above range, amorphous component is insufficient whereby the aimed shrinking rate is not achieved while, when the content is more than that, although the aimed shrinking rate can be achieved, the shrinking rate after aging is deteriorated, the shrinking rate at low temperature (70°C) is deteriorated or the heat resistance is significantly deteriorated.

It is necessary that the copolymerized polyester resin according to the present invention contains diethylene glycol as a diol component. A content of diethylene glycol is 7% by mole or more, preferably 8% by mole or more, and more preferably 9% by mole or more when the total amount of the whole diol component is taken as 100% by mole. The content of diethylene glycol is 15% by mole or less, preferably 14% by mole or less, and more preferably 13% by mole or less when the total amount of the whole diol component is taken as 100% by mole. Diethylene glycol has a long-chain structure compared with ethylene glycol. Accordingly, diethylene glycol has a role of imparting flexibility to polymers. As a result of combining diethylene glycol with neopentyl glycol, the stretching stress during stretch of the film lowers whereby deterioration of the shrinking rate at low temperature (70°C) is suppressed and deterioration of the shrinking rate after aging is also suppressed. When the content of diethylene glycol is less than the above range, the above-mentioned improving effect is small and the aimed quality is not achieved while, when it is more than the above range, no more improving effect is achieved and there are resulted such problems that the heat resistance is significantly deteriorated and that the yellowish tint of the film becomes strong.

In the copolymerized polyester resin according to the present invention, it is preferred that a molar proportion of each phosphorus compound contained in the copolymerized polyester resin and having a structure of the following residue A, the following residue B, or the following residue C satisfies the following inequality (1). The molar proportion of the following inequality (1) is more preferably 0.6 or more, and further preferably 0.7 or more. Even though the upper limit of the molar proportion is not particularly limited, it is preferred to be 1.0 or less in the present invention.

(1) Residue A (mol%)/[residue B + residue C] (mol%) > 0.5

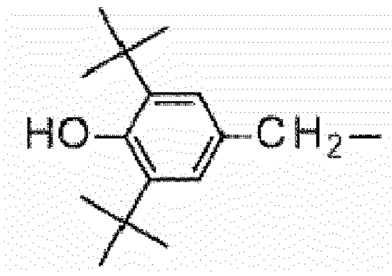

(residue A)

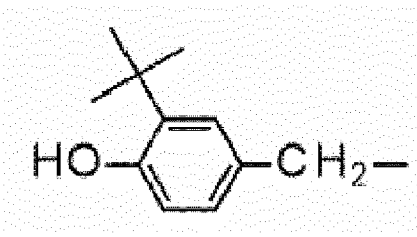

(residue B)

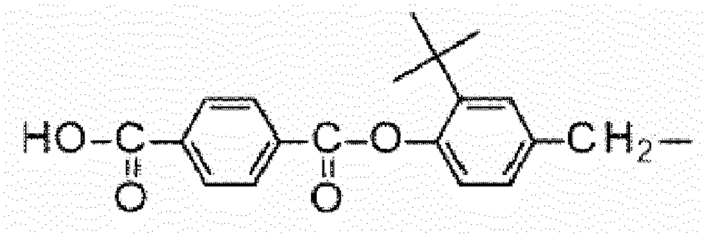

(residue C)

These residues in the phosphorus compounds contained in the copolymerized polyester resin are derived from phosphorus compounds used as a polymerization catalyst in the polymerization for the copolymerized polyester resin. Among these residues in the phosphorus compounds, the residue A has a hindered phenol structure. Accordingly, the residue A has an effect of imparting excellent thermal stability to the copolymerized polyester resin and inhibiting degradation caused by heating of the copolymerized polyester resin during the film preparation. As a result, recovery waste generated in a step of preparing the heat-shrinkable film can be recycled. Therefore, the costs for preparing the film can be reduced.

Further, it is necessary that the copolymerized polyester resin of the present invention contains aluminum atom and phosphorus atom, wherein an amount of the aluminum atom in the copolymerized polyester resin is 15 to 40 ppm on the mass basis and wherein a molar ratio of the phosphorus atom to the aluminum atom (ratio of P/Al) in the copolymerized polyester resin is preferably 1.8 to 2.6.

In the present invention, the amount of aluminum atom in the copolymerized polyester resin is preferably 15 to 40 ppm, more preferably 17 to 38 ppm, and further preferably 20 to 35 ppm. When the amount (residual amount) of the aluminum atom is less than the above range, the catalytic activity may not be sufficiently achieved. On the contrary, when the amount (residual amount) of aluminum atom exceeds the above range, the thermal stability may be lowered, or foreign matters caused by aluminum may be generated, or a coloration may be increased.

In the present invention, the ratio of the phosphorus atom to the aluminum atom is also important. To be more

specific, the molar ratio of the phosphorus atom to the aluminum atom (ratio of P/Al) in the copolymerized polyester resin of the present invention is preferably 1.8 to 2.6, more preferably 2.0 to 2.4, and further preferably 2.1 to 2.3. The aluminum atom and the phosphorus atom in the copolymerized polyester resin are derived from the aluminum compound and the phosphorus compound, respectively, used as the polymerization catalyst of the copolymerized polyester resin. When the aluminum compound is solely used as the polymerization catalyst, its catalytic activity cannot be sufficiently exhibited. In the meantime, when the phosphorus compound is used together with the aluminum compound as the polymerization catalyst in a specific ratio, it is now possible to sufficiently enhance the catalytic activity. When the molar ratio of the phosphorus atom to the aluminum atom in the copolymerized polyester resin is out of the above range, the function as the polymerization catalyst may not be sufficiently achieved. When the molar ratio of the phosphorus atom to the aluminum atom in the copolymerized polyester resin is less than the above range, the thermal stability may be lowered, or foreign matters caused by aluminum may be generated, or a coloration may be increased. On the contrary, when the molar ratio of the phosphorus atom to the aluminum atom in the polyester resin exceeds the above range, the catalytic activity may not be sufficiently achieved.

With regard to the aluminum atom in the aluminum compound acting as the polymerization catalyst, nearly 100% of its amount firstly added to a system as the polymerization catalyst remains in the copolymerized polyester resin produced by the polymerization even when the system is placed under an environment of reduced pressure upon polymerization of the polyester resin. Therefore, as to the aluminum atom, it is possible to consider that the amount used as the polymerization catalyst is equal to the content in the resin (residual amount) . Accordingly, there is no problem even if the amount of the aluminum atom is defined by the content (residual amount) instead of the amount used as the polymerization catalyst. As to the phosphorus compound acting as the polymerization catalyst together with the aluminum compound, a part of the amount firstly added to a system as the polymerization catalyst is removed to an outside of the system when the system is placed under an environment of reduced pressure upon polymerization of the copolymerized polyester resin. However, this removal rate does not greatly vary but is almost constant. Considering this fact that the phosphorus atom is removed in an almost stable removal rate, it can be said that there is no problem even if the amount of the phosphorus atom is defined by the content (residual amount) instead of the amount used as the polymerization catalyst.

As to the aluminum compound used as the polymerization catalyst in the present invention, it is possible to use known aluminum compound without limitation.

As to the aluminum compound, there are specifically exemplified aluminum acetate, basic aluminum acetate, aluminum lactate, aluminum chloride, aluminum hydroxide and aluminum hydroxide chloride and an organoaluminum compound such as aluminum acetylacetonate and aluminum oxalate as well as partially hydrolyzed products thereof. Among the above, preferred ones are carboxylate, inorganic acid salt and chelate compound and, among them, more preferred ones are aluminum acetate, basic aluminum acetate, aluminum lactate, aluminum chloride, aluminum hydroxide, aluminum hydroxide chloride and aluminum acetylacetonate. Further preferred ones are aluminum acetate, basic aluminum acetate, aluminum chloride, aluminum hydroxide, and aluminum hydroxide chloride. The most preferred ones are aluminum acetate and basic aluminum acetate.

In the present invention, the phosphorus compound used as a polymerization catalyst needs to be a 3,5-di-tert-butyl-4-hydroxybenzylphosphonic acid-based compound. Especially, dialkyl 3,5-di-tert-butyl-4-hydroxybenzylphosphonate represented by the following chemical formula 1 is preferable.

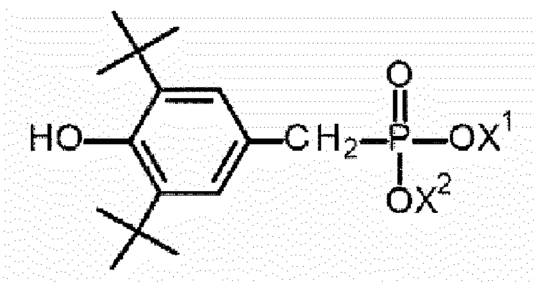

(chemical formula 1)

(In the chemical formula 1, $X^1$ and $X^2$ represent a hydrogen or an alkyl group having 1 to 4 carbon atoms. $X^1$ and $X^2$ may be identical with each other or different from each other.)

The alkyl group of $X^1$ and $X^2$ preferably has 1 to 4 carbon atoms. Particularly, an ethyl ester compound having 2 carbon atoms is preferable because it is commercially available as Irganox 1222 (manufactured by BASF SE) and can easily be obtained. The compound is represented by the following chemical formula 2.

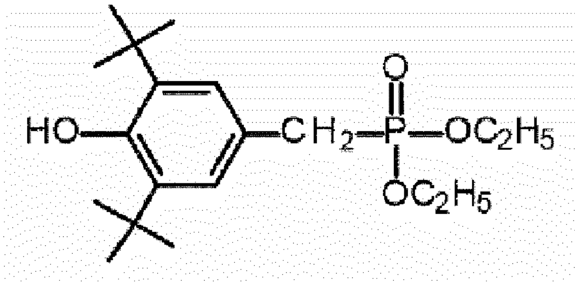

(chemical formula 2)

As to the amount of the phosphorus compound used as the polymerization catalyst, it is preferred that 31 to 119 ppm in terms of phosphorus atom remains to the total mass of the resulting copolymerized polyester resin. It is more preferably 39 to 105 ppm remains and further preferably 48 to 92 ppm remains. When the phosphorus atom being outside the above upper and lower limits remains, the polymerization activity may be lowered. As explained above, with regard to the phosphorus compound, a part of the amount firstly added to a system as the polymerization catalyst is removed to an outside of the system when the system is placed under an environment of reduced pressure upon polymerization of the copolymerized polyester resin. However, this removal rate is almost constant. Accordingly, the adding amount of the phosphorus atom may be determined, considering the removal rate.

In the present invention, a metal-containing polycondensation catalyst such as an antimony compound, a titanium compound, a tin compound and a germanium compound may also be used in addition to the above aluminum compound and phosphorus compound so as to further enhance the catalytic activity within such an extent that the effect of the present invention is not deteriorated thereby. In that case, an amount of these metal-containing polycondensation catalyst is preferred to be 5 ppm or less in terms of metal atom. However, an antimony compound which is commonly used as the polymerization catalyst is inferior in the enhancing effect for the thermal stability of the resin as mentioned above. Accordingly, the antimony compound should not be used in the present invention.

In the present invention, at least one substance in small amount selected from alkali metal, alkali earth metal and compounds thereof may co-exist as the second metal-containing component in addition to the aluminum compound. Coexistence of the second metal-containing component as such in the catalyst system enhances the catalyst activity in addition to the effect of inhibiting the production of diethylene glycol. Accordingly, it is possible to obtain a catalyst component which exhibits much more enhanced reaction rate, and that is effective in terms of the enhancement of productivity. When alkali metal, alkali earth metal or compound thereof is jointly added and used, the using amount (mol%) is preferably $1 \times 10^{-5}$ to 0.01 mol% to molar number of the dicarboxylic acid component constituting the copolymerized polyester resin. With regard to the alkali metal, the alkali earth metal or the compound thereof, nearly 100% of its using amount remains in the polyester resin produced by the polymerization even when the system is placed under an environment of reduced pressure upon polymerization of the polyester resin. Therefore, as to the alkali metal, the alkali earth metal or the compound thereof, it is possible to consider that the using amount is equal to the residual amount in the resin.

For improving the color tone of the copolymerized polyester resin, a cobalt compound may be compounded therewith. As a result of addition of such cobalt compound, the color b value can be particularly made small. As to the cobalt compound, there are exemplified cobalt acetate, cobalt chloride, cobalt benzoate and cobalt chromate. Among them, cobalt acetate is preferred. A content of the cobalt compound as such is preferably 1 to 30 ppm, more preferably 3 to 20 ppm, and further preferably 5 to 15 ppm to the copolymerized polyester resin. When the content of cobalt in the copolymerized polyester resin is less than the above range, yellowish tint of the copolymerized polyester resin becomes strong while, when it is more than the above range, the copolymerized polyester resin becomes dark or bluish tint becomes strong due to a reduction of cobalt metal whereby a commercial value lowers.

The above metal compound may be added before starting the esterification reaction or during any time between after finishing the pressurized esterification reaction and before starting the initial polycondensation reaction. However, when the titanium compound is used as the polycondensation catalyst, it is preferable to add the above metal compound before the esterification reaction. It is also preferable to add other polycondensation catalyst, thermostabilizer and additive after the esterification reaction.

It is necessary that the copolymerized polyester resin according to the present invention has an intrinsic viscosity (IV) of preferably from 0.65 to 0.86 dl/g, more preferably from 0.65 to 0.81 dl/g, and further preferably from 0.70 to 0.81 dl/g. When the intrinsic viscosity (IV) of the copolymerized polyester resin is less than the above range, the intrinsic viscosity of the resulting film becomes too low whereby a drawdown during the film preparation becomes large and the film preparation itself becomes difficult. In addition, strength of the resulting film becomes weak and the aimed quality cannot be achieved. When the intrinsic viscosity (IV) of the copolymerized polyester resin is more than the above range, a decomposition reaction progresses in parallel with melt polymerization, and thus the increase of viscosity stops. In

terms of stirring ability of a polymerization vessel, the upper limit of the intrinsic viscosity (IV) is about 0.86 dl/g. The copolymerized polyester resin according to the present invention is an amorphous polymer wherein crystallization is less likely to proceed and therefore cannot assume a crystalline state, or even if it is crystallized, its degree of crystallization is very low. Therefore, the copolymerized polyester resin according to the present invention has no clear melting point (endothermic peak by melting in a measurement using a DSC) . Therefore, it is difficult to perform solid phase polycondensation (solid phase polymerization) at a temperature lower than the melting point of the copolymerized polyester resin. Also from such a viewpoint, the upper limit of the intrinsic viscosity (IV) of the copolymerized polyester resin according to the present invention is about 0.86 dl/g.

If necessary, various additives such as wax, antioxidant, antistatic agent, crystal nucleus agent, viscosity-reducing agent, heat stabilizer, pigment for coloration, coloration preventer or ultraviolet absorber may be added to the copolymerized polyester resin of the present invention.

Now, we will explain the production method of the copolymerized polyester resin of the present invention. The copolymerized polyester resin of the present invention may be produced by any of a direct esterification reaction using terephthalic acid as a raw material and a transesterification reaction using dimethyl terephthalate as a raw material of a terephthalic acid component. In the present invention, the direct esterification reaction is preferred.

The production method for the copolymerized polyester resin of the present invention is classified into a continuous method and a batch method, depending on a supply mode of the raw material or an extrusion mode of the polymer. The polyester resin of the present invention can be produced by any of those methods. In the present invention, a continuous method is preferred in view of high stability of productivity and of product quality. In the continuous method, the raw material is continuously supplied whereby the esterification reaction is conducted continuously and the polycondensation thereafter is also conducted continuously. In any of those methods, the esterification reaction may be conducted in a single step or may be conducted dividedly in multiple steps. The melt polycondensation reaction may also be conducted in a single step or may be conducted dividedly in multiple steps.

In the production of the copolymerized polyester resin of the present invention, a polymerization catalyst is used for enhancing an efficiency of the polycondensation reaction. It is preferred in the present invention to use a combination of the polymerization catalyst containing at least one type selected from aluminum compounds and at least one type selected from phosphorus compounds. The polymerization catalyst may be added to the reaction system in any stage of the polymerization reaction. For example, it can be added to the reaction system in any stage of before or during the esterifying reaction or transesterification reaction, or in any stage immediately before initiation of the polycondensation reaction or during the polycondensation reaction. Among them, it is preferred to add immediately before initiation of the polycondensation reaction.

As explained above, the phosphorus compound used as a polymerization catalyst needs to be a 3,5-di-tert-butyl-4-hydroxybenzylphosphonic acid-based compound. Especially, dialkyl 3,5-di-tert-butyl-4-hydroxybenzylphosphonate represented by the chemical formula 1 is preferable and the phosphorus compound represented by the chemical formula 2 is most preferable.

The phosphorus compound used as a polymerization catalyst is added preferably in a slurry or solution state, more preferably in a state of being dissolved in a solvent such as water or glycol, further preferably in a state of being dissolved in water and/or ethylene glycol, most preferably in a state of being dissolved in ethylene glycol.

The phosphorus compound used in the present invention is preferably used after heat-treated in ethylene glycol. The heat treatment in ethylene glycol is preferably performed after the phosphorus compound is dissolved, but the phosphorus compound does not necessarily have to be completely dissolved.

As to the heat treatment conditions, the heat treatment temperature is preferably 175 to 196°C, more preferably 175 to 185°C, and further preferably 175 to 180°C. The heat treatment time is preferably 30 to 240 minutes and more preferably 60 to 210 minutes.

The concentration of the phosphorus compound during the heat treatment is preferably 3 to 10 mass%.

The heat treatment can even out the acidity of the phosphorus compound contained in the ethylene glycol solution, can improve the polymerization activity achieved by a combined use with the aluminum compound, and can decrease the formation of an aluminum-based contaminant.

When the phosphorus compound represented by the chemical formula 2 is used in the heat treatment, the phosphorus compound partially changes its structure. The phosphorus compound, for example, undergoes elimination of a t-butyl group, hydrolysis of an ethyl ester group, and a change to a hydroxyethyl ester structure (structure obtained by transesterification with ethylene glycol) and the like (the elimination of a t-butyl group remarkably occurs under high temperature in a polymerization step). Accordingly, in the present invention, the phosphorus compound may encompass structurally changed phosphorus compounds represented in Table 1 other than the phosphorus compound represented by the chemical formula 2. The amounts of the phosphorus compounds, which are represented in Table 1, in the ethylene glycol solution can be quantified by P-NMR spectrometry.

[Table 1]

| Structural changes of phosphorus compounds represented by the chemical formula 2 | | |
|---|---|---|
| 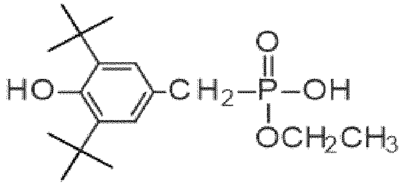 | 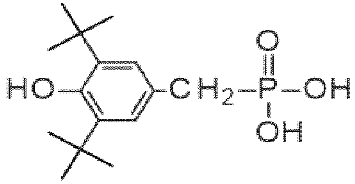 | 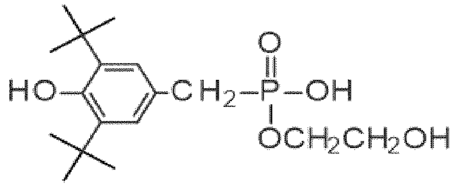 |
| 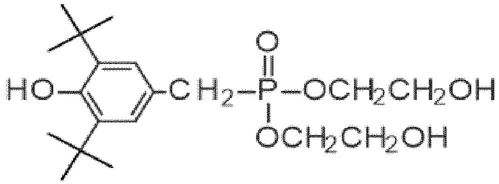 | 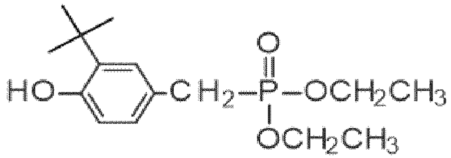 | 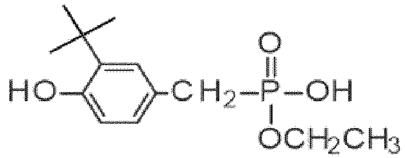 |
| 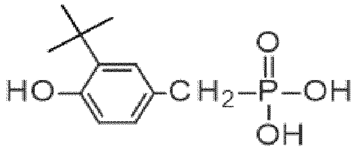 | 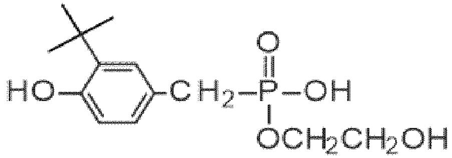 | 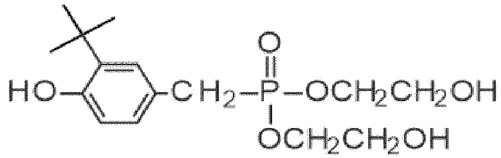 |

Accordingly, in the present invention, when the phosphorus compound represented by the chemical formula 2 is used as the phosphorus compound, the phosphorus compound includes modified compounds of diethyl 3,5-di-tert-butyl-4-hydroxybenzylphosphonate represented in Table 1, other than diethyl 3,5-di-tert-butyl-4-hydroxybenzylphosphonate itself.

The copolymerized polyester resin produced using, as the phosphorus compound, diethyl 3,5-di-tert-butyl-4-hydroxybenzylphosphonate and the modified compounds thereof includes 18 phosphorus-compound structures represented in Table 2.

[Table 2]

| | residue A | residue B | residue C |
|---|---|---|---|
| structure of phenol part / phosphorus structure | 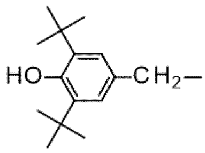 | 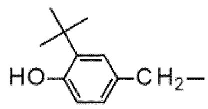 | 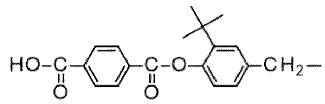 |
| 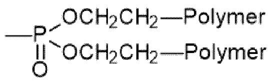 | chemical formula 3 | chemical formula 4 | chemical formula 5 |
| 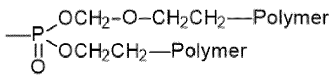 | chemical formula 6 | chemical formula 7 | chemical formula 8 |
| 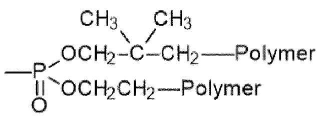 | chemical formula 9 | chemical formula 10 | chemical formula 11 |

| | residue A | residue B | residue C |
|---|---|---|---|
| structure of phenol part / phosphorus structure | 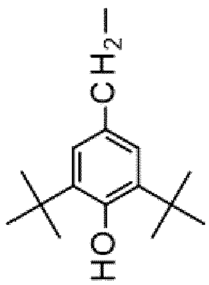 | 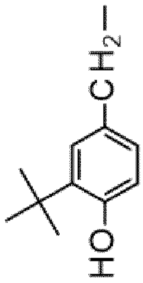 | 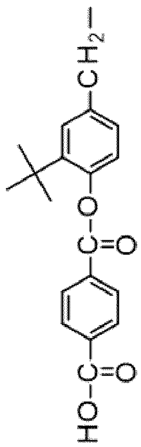 |
| 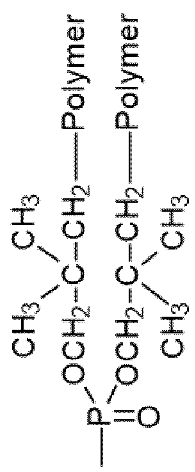 | chemical formula 12 | chemical formula 13 | chemical formula 14 |
| 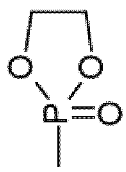 | chemical formula 15 | chemical formula 16 | chemical formula 17 |
| 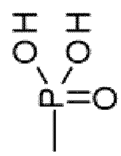 | chemical formula 18 | chemical formula 19 | chemical formula 20 |

As described above, among the phosphorus-compound structures represented in Table 2, the residue A has

a hindered phenol structure. Accordingly, the residue A has an effect of imparting more excellent thermal stability to the copolymerized polyester resin compared with the residues B and C and inhibiting degradation caused by heating of the copolymerized polyester resin during the film preparation.

The residues B and C are generated through elimination of a t-butyl group in the residue A. The elimination of a t-butyl group is affected by the temperature of a final polymerization tank. Therefore, in order to increase the content of the residue A, the temperature of the final polymerization tank is important.

The temperature of the final polymerization tank in the production of the copolymerized polyester resin according to the present invention is preferably 270 to 280°C, and more preferably 272 to 278°C. When the temperature of the final polymerization tank is lower than the above range, the polymerization activity is decreased and the production efficiency of the copolymerized polyester resin is decreased. On the other hand, when the temperature of the final polymerization tank is higher than the above range, the thermal stability of the copolymerized polyester resin and the heat-shrinkable film is deteriorated.

It is preferred that the copolymerized polyester resin according to the present invention has a melt viscosity of 200Pa·S or less, when measured at a shear rate of 6080/S at 250°C. When the melt viscosity is high, extrusion becomes difficult unless a resin temperature is increased. In the raw material as in the present invention which contains diethylene glycol abundantly, foreign matters in a film and a sheet after extrusion become abundant when the resin temperature during the extrusion is high whereby it is not preferred. Accordingly, the resin temperature during the extrusion is preferred to be 245°C or low and more preferred to be 240°C or low. A lower limit of the resin temperature during the extrusion is a melting point of the raw material. However, the melting point is not clear in the raw material of the present invention and, at 210°C, melting takes place. Accordingly, 210°C shall be made as the lower limit of the resin temperature during the extrusion. Further, when the melt viscosity measured at 250°C is 200 Pa·S or more, a load of a machine used for melt extrusion of the raw material becomes high and size of facilities becomes big whereby it is not preferred. The melt viscosity is preferred to be 190 Pa·S or less and more preferred to be 180 Pa·S or less. Furthermore, when the melt viscosity is too low, shearing stress at a discharge part of the melted resin becomes low resulting in the unevenness in thickness whereby it is not preferred. The melt viscosity measured at 250°C is preferred to be 100 Pa·S or more, and more preferred to be 110 Pa·S or more.

The heat-shrinkable film according to the present invention contains a copolymerized polyester resin, wherein the copolymerized polyester resin contains terephthalic acid as a main component of a dicarboxylic acid component, and contains ethylene glycol as a main component of a diol component, wherein a content of neopentyl glycol is from 18 to 32% by mole and a content of diethylene glycol is from 7 to 15% by mole when a total amount of the whole diol component is taken as 100% by mole, and wherein a molar proportion of each phosphorus compound contained in the heat-shrinkable film and having a structure of the following residue A, the following residue B, or the following residue C preferably satisfies the following inequality (1).

(1) Residue A (mol%)/[residue B + residue C] (mol%) > 0.5

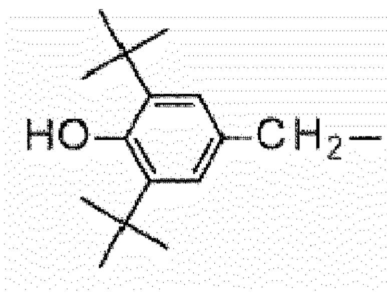

(residue A)

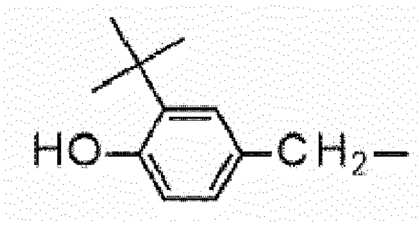

(residue B)

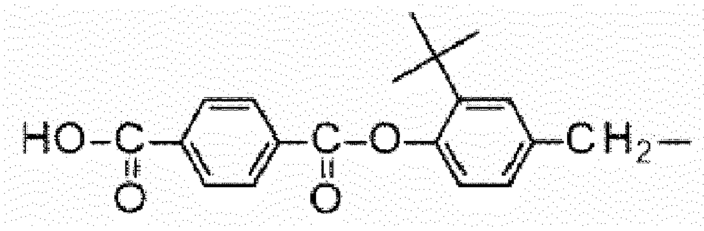

(residue C)

The copolymerized polyester resin constituting the heat-shrinkable film according to the present invention, and the inequality (1) are achieved by using the copolymerized polyester resin described above.

The heat-shrinkable film according to the present invention is preferably prepared by using a polyester resin composition obtained by blending an antiblocking agent in the copolymerized polyester resin. The antiblocking agent is blended so as to form surface projections on the surface of a heat-shrinkable film obtained by forming the copolymerized polyester resin according to the present invention into a film. Such surface projections have a function of improving the handling properties of the film, such as smoothness, runnability, wear resistance, and winding. The antiblocking agent is preferably blended in a form of masterbatch.

A base material for constituting the masterbatch of the antiblocking agent is preferably a polyester resin, more preferably a polyester resin having the same structure as the structure of the above-mentioned copolymerized polyester resin.

The composition of the antiblocking agent is not limited as long as the antiblocking agent is particles insoluble in the polyester resin. The antiblocking agent may be inorganic particles or organic particles. Alternatively, the antiblocking agent may be inorganic and organic composite particles. The heat-shrinkable film preferably contains 150 to 500 ppm of the antiblocking agent on the mass basis. The heat-shrinkable film having a content of the antiblocking agent of less than the above range decreases the handling properties. On the other hand, the heat-shrinkable film having a content of the antiblocking agent of more than the above range decreases the transparency and decreases the commercial value of a heat-shrinkable label obtained by using the heat-shrinkable film.

The antiblocking agent preferably has an average particle size of 0.5 to 3.0 μm. The average particle size is more preferably 0.8 to 2.5 μm and further preferably 1.0 to 2.0 μm. The antiblocking agent having an average particle size of less than 0.5 μm is not preferable because such an antiblocking agent decreases the effect of imparting the handling properties such as smoothness and runnability. On the other hand, the antiblocking agent having an average particle size of more than 3.0 μm is not preferable because such an antiblocking agent forms coarse projections and thereby sometimes impair the quality of the film. The average particle size referred to in the present invention is obtained from a particle size distribution measured by a laser light scattering method, with water or ethylene glycol used as a medium.

In the present invention, the blending amount of the antiblocking agent in the antiblocking-agent masterbatch is preferably in a range of 0.5 to 20 mass%, and more preferably in a range of 0.6 to 15 mass%. When the blending amount of the antiblocking agent is less than 0.5 mass%, the blending amount of the antiblocking-agent masterbatch needs to be increased, and it is economically disadvantageous . On the other hand, when the blending amount of the antiblocking agent is more than 20 mass%, aggregation of the antiblocking agent is generated and coarse particles are increased, causing problems such as clogging of a filter for clarifying a polymer in a film-preparation step and an increase of surface defects of the prepared film. Therefore, such a blending amount is not preferable.

As to the inorganic particles used in the present invention, particles can be used that are made from an oxide, a carbonate, a silicate, a sulfate, or an aluminate of a metal such as titanium, aluminum, silicon, calcium, magnesium, or barium. Specific examples of the inorganic particles include particles of titanium dioxide, alumina, aluminosilicate, silica, calcium oxide, calcium carbonate, or barium sulfate, and also include particles of naturally occurring talc, mica, kaolinite, or zeolite. The inorganic particles, however, are not limited to these examples. Examples of the organic particles used in the present invention include silicone-based, crosslinked polyacrylic acid-based, or benzoguanamine resin-based particles. Among these examples, silica particles are preferable.

The method for producing the antiblocking-agent masterbatch of the present invention is not limited. The method may be, for example, a polymerization-step adding method for adding a slurry of the antiblocking agent in a polymerization step for a polyester resin, or a so-called melt-kneading method for mixing the antiblocking agent in a molten polyester resin.

The timing for adding the antiblocking-agent slurry in the polymerization-step adding method is not limited. The antiblocking-agent slurry may be added at any timing from an early phase of a transesterification reaction step or an esterification reaction step until the start of initial polymerization. The antiblocking-agent slurry may be directly added into a reaction tank or may be added, with a mixer or the like, into a transfer line between reaction tanks. Alternatively, an adding tank may be installed for the addition of the antiblocking-agent slurry.

In order to prevent the aggregation of the antiblocking agent, the antiblocking agent is more preferably added

after it is formed into a slurry with a glycol and then mechanically dispersed with a medium stirring disperser such as a sand grinder, an attritor, or ultrasonic waves, followed by addition of an alkali metal compound, an ammonium compound, and a phosphorus compound so as to improve dispersion efficiency.

The melt-kneading method is not limited. The melt-kneading method may be performed by using a single or multi screw kneading machine or may be performed by using a kneader.

The melt-kneading method may be implemented with a molten polyester resin, or may be implemented with a kneading apparatus attached to an outlet of a polymerization step for a polyester resin.

The heat-shrinkable film according to the present invention preferably has a melt specific resistance of $0.15 \times 10^8$ to $0.6 \times 10^8$ $\Omega$·cm. The melt specific resistance is more preferably $0.15 \times 10^8$ to $0.4 \times 10^8$ $\Omega$·cm. The heat-shrinkable film having a melt specific resistance of less than the above range is sometimes permanently charged and decreases the handling properties when prepared by an electrostatic adhesion casting method. On the other hand, the heat-shrinkable film having a melt specific resistance of more than the above range decreases the electrostatic adherence and deteriorates the preparation efficiency. The melt specific resistance of the heat-shrinkable film is measured from the polyester resin composition constituting the heat-shrinkable film.

The heat-shrinkable film according to the present invention is preferably prepared by using a polyester resin composition obtained by blending an electrostatic adherence imparting agent in the copolymerized polyester resin. The electrostatic adherence imparting agent can improve, in the electrostatic adhesion casting method, the electrostatic adherence of a sheet-shaped product to a cooling drum, wherein the sheet-shaped product has been obtained by forming the copolymerized polyester resin according to the present invention into a film. Accordingly, the electrostatic adherence imparting agent can exhibit effects of, for example, improving the film preparation efficiency and reducing uneven thickness of the film. Thus, the preparation efficiency and the quality of the heat-shrinkable film can be improved. The electrostatic adherence imparting agent is preferably blended in a form of masterbatch.

A base material for constituting the masterbatch of the electrostatic adherence imparting agent is preferably a polyester resin, more preferably a polyester resin having the same structure as the structure of the copolymerized polyester resin.

The electrostatic adherence imparting agent masterbatch preferably has a melt specific resistance of $0.005 \times 10^8$ to $0.05 \times 10^8$ $\Omega$·cm. In order to improve the film preparation properties of the heat-shrinkable film, a polyester resin composition having the electrostatic adherence imparting agent masterbatch blended therein preferably has a melt specific resistance of $0.15 \times 10^8$ to $0.6 \times 10^8$ $\Omega$·cm. The electrostatic adherence imparting agent masterbatch having a melt specific resistance of more than $0.05 \times 10^8$ $\Omega$·cm needs to be added in a great amount so as to improve the film preparation properties of the copolymerized polyester resin, and thus causes problems such as an increase of production costs. The electrostatic adherence imparting agent masterbatch having a melt specific resistance of less than $0.005 \times 10^8$ $\Omega$·cm is technically difficult to be achieved. More preferable melt specific resistance of the electrostatic adherence imparting agent masterbatch is $0.005 \times 10^8$ to $0.025 \times 10^8$ $\Omega$·cm.

To the electrostatic adherence imparting agent masterbatch, a magnesium compound and an alkali metal compound are added so as to lower the melt specific resistance. A phosphorus compound is also added so as to disperse these metal ion components in polyester without allowing them to be changed into contaminants and so as to further improve the thermal stability. The heat-shrinkable film preferably contains the magnesium compound in an amount of magnesium atoms of 15 to 150 ppm on the mass basis. The heat-shrinkable film having a content of the magnesium compound of less than the above range increases the melt specific resistance, deteriorates the electrostatic adherence, and decreases the film preparation properties. On the other hand, the heat-shrinkable film having a content of the magnesium compound of more than the above range increases the formation amount of an insoluble contaminant (magnesium salt), and causes a decrease of the thermal stability, leading to awful coloring of the film. The heat-shrinkable film preferably contains the alkali metal compound in an amount of alkali metal atoms of 1.5 to 15 ppm on the mass basis. The heat-shrinkable film having a content of the alkali metal compound of less than the above range increases the melt specific resistance, deteriorates the electrostatic adherence, and decreases the film preparation properties. On the other hand, the heat-shrinkable film having a content of the alkali metal compound of more than the above range causes a decrease of the thermal stability, leading to awful coloring of the film. The heat-shrinkable film preferably contains the phosphorus compound in an amount of phosphorus atoms of 7 to 80 ppm on the mass basis. The heat-shrinkable film having a content of the phosphorus compound of less than the above range increases the formation amount of an insoluble contaminant, increases the melt specific resistance, deteriorates the electrostatic adherence, and decreases the film preparation properties. Further, such a heat-shrinkable film causes a decrease of the thermal stability, leading to awful coloring of the film. On the other hand, the heat-shrinkable film having a content of the phosphorus compound of more than the above range increases the melt specific resistance, deteriorates the electrostatic adherence, and decreases the film preparation properties.

As to the magnesium compound used in the present invention, a known magnesium compound can be used. Examples of the magnesium compound include low fatty acid salts such as magnesium acetate, and alkoxides such as magnesium methoxide. Any one of these compounds may be used alone, or two or more compounds may be used in

combination. In particular, magnesium acetate is preferable.

The electrostatic adherence imparting agent masterbatch preferably has an amount of magnesium atoms of 400 to 2700 ppm on the mass basis, in relation to the electrostatic adherence imparting agent masterbatch. The electrostatic adherence imparting agent masterbatch having an amount of magnesium atoms of less than 400 ppm increases the melt specific resistance and needs to be added in a great amount so as to improve the film preparation properties of the polyester resin composition. Such an electrostatic adherence imparting agent masterbatch thus has a low effect as the masterbatch and causes problems such as an increase of production costs. The electrostatic adherence imparting agent masterbatch having an amount of magnesium atoms of more than 2700 ppm increases the formation amount of an insoluble contaminant (magnesium salt), and causes a decrease of the heat resistance, leading to awful coloring of the film. The amount of magnesium atoms is more preferably 450 to 2500 ppm and further preferably 450 to 2000 ppm.

Examples of an alkali metal of the alkali metal compound used in the present invention include lithium, sodium, and potassium. Examples of the alkali metal compound include low fatty acid salts such as lithium acetate and potassium acetate, and alkoxides such as potassium methoxide. Any one of these compounds may be used alone, or two or more compounds may be used in combination. As to the alkali metal, potassium is preferable due to its large effect of lowering the melt specific resistance. As to the alkali metal compound, an acetate is preferable, and potassium acetate is particularly preferable.

The electrostatic adherence imparting agent masterbatch preferably has an amount of alkali metal atoms of 40 to 270 ppm on the mass basis, in relation to the electrostatic adherence imparting agent masterbatch. The electrostatic adherence imparting agent masterbatch having an amount of alkali metal atoms of less than 40 ppm increases the melt specific resistance and needs to be added in a great amount so as to improve the film preparation properties of the polyester resin composition. Such an electrostatic adherence imparting agent masterbatch thus has a low effect as the masterbatch and causes problems such as an increase of production costs. The electrostatic adherence imparting agent masterbatch having an amount of alkali metal atoms of more than 270 ppm saturates the effect of improving the melt specific resistance, and causes a decrease of the heat resistance, leading to awful coloring of the film. The amount of alkali metal atoms is more preferably 45 to 250 ppm and further preferably 45 to 200 ppm.

Examples of the phosphorus compound that can be used for the electrostatic adherence imparting agent masterbatch in the present invention include phosphoric acid, phosphorus acid, hypophosphorous acid, phosphonic acid, phosphinic acid, and ester compounds thereof. Examples include phosphoric acid, trimethyl phosphate, tributyl phosphate, triphenyl phosphate, monomethyl phosphate, dimethyl phosphate, monobutyl phosphate, dibutyl phosphate, phosphorus acid, trimethyl phosphite, tributyl phosphite, methylphosphonic acid, dimethyl methylphosphonate, dimethyl ethylphosphonate, dimethyl phenylphosphonate, diethyl phenylphosphonate, diphenyl phenylphosphonate, ethyl diethylphosphonoacetate, phosphinic acid, methylphosphinic acid, dimethylphosphinic acid, phenylphosphinic acid, diphenylphosphinic acid, methyl dimethylphosphinate, and methyl diphenylphosphinate. Among these examples, in order to allow the heat-shrinkable film to highly exhibit the effects of the present invention, the phosphorus compound is desired to be at least one selected from the group consisting of a phosphorus compound that is a phosphoric acid trialkyl ester including an alkyl group having 2 to 4 carbon atoms, and ethyl diethylphosphonoacetate. Especially, a phosphoric acid triester including an alkyl group having 2 to 4 carbon atoms is preferably used. Specific examples of the phosphoric acid triester include triethyl phosphate, tripropyl phosphate, and tributyl phosphate. Any one of these compounds may be used alone, or two or more compounds may be used in combination. Triethyl phosphate is particularly preferable because it is considered to form a complex having appropriately strong interaction with magnesium ions, and the electrostatic adherence imparting agent masterbatch is obtained that has a low melt specific resistance, less contaminants, and excellent color.

The electrostatic adherence imparting agent masterbatch preferably has an amount of phosphorus atoms of 200 to 1700 ppm on the mass basis, in relation to the electrostatic adherence imparting agent masterbatch. When the amount of phosphorus atoms is less than 200 ppm, the effect of stabilizing magnesium ions and alkali metal ions and dispersing the ions in polyester is decreased, and therefore the formation amount of insoluble contaminants is increased. Magnesium having been changed into a contaminant has no effect of lowering the melt specific resistance. Therefore, the melt specific resistance is increased in relation to the addition amount of magnesium. Also, the heat resistance is decreased, leading to awful coloring of the film. When the amount of phosphorus atoms is more than 1700 ppm, an excessive phosphorus compound interacts with magnesium ions and the charge of the magnesium ions does not therefore contribute to the effect of lowering the melt specific resistance. Accordingly, the melt specific resistance is increased in relation to the addition amount of magnesium. The amount of phosphorus atoms is more preferably 220 to 1000 ppm.

The content of the magnesium atoms, the content of the alkali metal atoms, and the content of the phosphorus atoms in the electrostatic adherence imparting agent masterbatch can be quantified by the method described in the section EXAMPLES below. The timing of adding the magnesium compound, the alkali metal compound, and the phosphorus compound to a polyester resin is not particularly limited. Preferred timing, however, is adding the compounds during the polymerization for polyester, particularly in the middle of an esterification (or transesterification) step, or in a period from the time when an esterification (or transesterification) step is finished until the start of a polycondensation

step. This is because such addition can inhibit magnesium ions and alkali metal ions from forming salts with an acid component of polyester and thus being changed into contaminants and can uniformly disperse the compounds in the oligomer.

When these compounds are added during the polymerization for a polyester resin, the magnesium atoms and the alkali metal atoms remain in the polyester resin composition in the amount almost completely the same as added. In the meantime, the phosphorus atoms are sometimes distilled away from the polymerization system in a reduced environment. Therefore it is necessary to understand in advance the relationship between the addition amount and the remaining amount and determine the addition amount of the phosphorus compound, taking the relationship into consideration.

In case the polyester contains a dicarboxylic acid component and a glycol component as constituent components, the effects of the present invention can be obtained when the molar ratio between the magnesium atoms, the alkali metal atoms, and the phosphorus atoms satisfies the following inequality (2), provided that the amount of the magnesium atoms in relation to the amount of the dicarboxylic acid component defined as m (mol%), the amount of the alkali metal atoms in relation to the amount of the dicarboxylic acid component defined as k (mol%), and the amount of phosphorus atoms in relation to the amount of the dicarboxylic acid component defined as p (mol%).

$$(2)\quad 2 \leq (m + k/2)/p \leq 3.5$$

It is considered that the phosphorus atoms stabilize magnesium ions and alkali metal ions without allowing them to be changed into contaminants. A magnesium ion is divalent and an alkali metal ion is univalent. The sum of the amounts of magnesium ions and alkali metal ions is expressed as (m + k/2), and a ratio "(m + k/2)/p" obtained by dividing the sum by p is defined as the relative amount of magnesium ions and alkali metal ions in relation to the amount of the phosphorus atoms.

When the value of " (m + k/2) /p" is more than 3.5, the amount of the phosphorus atoms is relatively small in relation to the amount of the magnesium atoms and the alkali metal atoms. Accordingly, the effect of stabilizing magnesium ions and alkali metal ions and dispersing the ions in polyester is decreased, and the formation amount of insoluble contaminants (magnesium salt and alkali metal salt) is increased. Magnesium having been changed into a contaminant has no effect of lowering the melt specific resistance and therefore the melt specific resistance is increased in relation to the addition amount of magnesium. Also, the heat resistance is decreased and the color of the electrostatic adherence imparting agent masterbatch and the film is deteriorated.

When the value of " (m + k/2)/p" is less than 2, the amount of the phosphorus atoms is relatively excessive in relation to the amount of the magnesium atoms and the alkali metal atoms. In this case, an excessive phosphorus compound interacts with magnesium ions. Therefore, the degradation of the color is improved but the charge of the magnesium ions does not contribute to the effect of lowering the melt specific resistance. Accordingly, the melt specific resistance is increased in relation to the addition amount of magnesium. The value of " (m + k/2)/p" is more preferably 2.3 or more and 3 or less, and further preferably 2.5 or more and 3 or less.

When the heat-shrinkable film of the present invention is made into a film of 40 μm thickness, it is preferable that a number of defect in 1 mm size or more in the lengthwise direction of the film or in the widthwise direction of the film is more than 1.5 per 10 square meters of the film. When the number of defect is large, a part of the defect (foreign substance) results in an omission of ink upon printing and an appearance of a label after printing is deteriorated whereby it is not preferred. The number of the defect in the lengthwise direction of the film or in the widthwise direction of the film is preferred to be 1 or less and more preferred to be 0.5 or less per 10 square meters of the film.

When the heat-shrinkable film of the present invention is immersed for 10 seconds in hot water of 98°C under an unloaded state for shrinkage and is then immediately immersed for 10 seconds in water of 25°C ± 0.5°C to stop the shrinkage, the heat-shrinking rate (i.e., a heat-shrinking rate in hot water of 98°C) in the widthwise direction (in the main shrinking direction) of the film is preferred to be from 60% to 85%, wherein the heat-shrinking rate is calculated by the following formula (3) from lengths before and after the shrinking. The heat-shrinking rate in hot water at 98°C is more preferred to be 63% or more, and further preferred to be 66% or more. Incidentally, a demand is low for a film which has the heat-shrinking rate in hot water of 98°C in the main shrinking direction of more than 85%, an upper limit of the heat-shrinking rate in hot water is set to be 85%.

$$\text{Heat-shrinking rate (\%)} = \{[(\text{Length before shrinking}) - (\text{Length after shrinking})] / (\text{Length before shrinking})\} \times 100 \quad (3)$$

When the heat-shrinking rate in hot water at 98°C in the main shrinking direction is less than the above range, it is impossible to deal with a demand for a highly shrinking film covering the whole container (so-called full label). Moreover, when the film is used as a label, strain, insufficient shrinking, wrinkle, slack, etc. may occur in the label after

the heat-shrinking due to small shrinking amount.

Further, in the heat-shrinkable film of the present invention, the heat-shrinking rate in hot water of 98°C in the direction being orthogonal to the main shrinking direction of the film (the lengthwise direction) being measured in the same manner as above is preferred to be from -5% to 10%. The heat-shrinking rate in hot water at 98°C in the orthogonal direction to the main shrinking direction is more preferred to be 8% or less, and further preferred to be 6% or less. When the heat-shrinking rate in hot water at 98°C in the orthogonal direction to the main shrinking direction is less than the above range, a stretched length of the film by heating is too much and, in a use as a label for a container, no good shrunk appearance can be resulted whereby it is not preferred. On the contrary, when the heat-shrinking rate in hot water of 98°C in the orthogonal direction to the main shrinking direction is more than the above range, the label after the heat-shrinking becomes short (i.e. a height of the label decreases) and the label area becomes small whereby it is not preferred as the full label. Also, strain is apt to occur in the label after the heat-shrinking whereby it is not preferred.

Incidentally, when the heat-shrinking rate in hot water of 98°C in the orthogonal direction to the main shrinking direction is less than -5%, the height of a label after shrinking becomes high and, as a result, an excessive part is in a state of overabundance causing the winkles whereby a lower limit is set to be -5%.

In the heat-shrinkable film of the present invention, it is preferred that the maximum shrinking stress measured under hot air of 90°C is 2 MPa to 7 MPa in the main shrinking direction of the film and that a shrinking stress after 30 seconds from a start of the measurement of shrinking stress is from 60% to 100% of the maximum shrinking stress. The maximum shrinking stress at 90°C is more preferred to be 6 MPa or less and further preferred to be 5 MPa or less. Also, the maximum shrinking stress at 90°C is more preferred to be 2.5 MPa or more and further preferred to be 3 MPa or more. Incidentally, measurement of the shrinking stress is carried out by the method mentioned in Examples.

When the maximum shrinking stress at 90°C in the main shrinking direction of the film is more than the above range, although there is no problem therein in a case of containers of PET bottles, crash by the shrinking stress occurs during the shrinking in a case of containers having a thin thickness whereby it is not preferred. When the maximum shrinking stress at 90°C in the main shrinking direction of the film is less than the above range, in a use as a label for a container, there are some cases wherein the label becomes loose and does not tightly adhere to the container whereby it is not preferred.

When the heat-shrinkable film of the present invention is immersed for 10 seconds in hot water of 70°C under an unloaded state for shrinkage and is then immediately immersed for 10 seconds in water of 25°C ± 0.5°C to stop the shrinkage, the heat-shrinking rate (i.e., a heat-shrinking rate in hot water of 70°C) in the widthwise direction (in the main shrinking direction) of the film is preferred to be from 25% to 50%, wherein the heat-shrinking rate is calculated by the above formula (3) from lengths before and after the shrinking. The heat-shrinking rate in hot water at 70°C is more preferred to be 30% or more, and further preferred to be 35% or more. When the heat-shrinking rate in hot water at 70°C in the main shrinking direction is less than the above range, in a use as a label, strain, insufficient shrinking, wrinkle, slack, etc. may occur in the label after the heat-shrinking due to small shrinking amount when the label is shrunk with a device which uses a hot air as a heat source. Incidentally, a demand is low for a film which has the heat-shrinking rate in hot water of 70°C in the main shrinking direction of more than 50%, an upper limit of the heat-shrinking rate in hot water is set to be 50%.

In the heat-shrinkable film of the present invention, it is preferred that the difference between a heat-shrinking rate in hot water when the film which has not been subjected to any aging treatment is immersed for 10 seconds in hot water of 70°C and a heat-shrinking rate in hot water when the film which has been subjected to an aging treatment for 672 hours in an atmosphere of 40°C temperature and 65% relative humidity is immersed for 10 seconds in hot water of 70°C is from 0% to 5% (following formula (4)). The difference in the shrinking rates in hot water is more preferred to be 4% or less, and further preferred to be 3% or less. When the difference in the shrinking rates in hot water of 70°C before and after the aging is big, temperature conditions during the step wherein the film is shrunk into a label are different before and after the aging whereby it is not preferred. Particularly when the films before and after the aging are used in a mixed manner depending upon a stockpile state, appearances of the finish after shrinking are different if the heat-shrinking is conducted in an industrially continuous manner whereby it is not preferred. Incidentally, the most desirable outcome is that the difference in the heat-shrinking rates in hot water does not change before and after the aging. This is why the lower limit is set to be 0%.

Difference in heat-shrinking rates (%) = (Shrinking rate in hot water before aging) - (Shrinking rate in hot water after aging) (4)

In the heat-shrinkable film of the present invention, it is preferred that, after the film has been subjected to the aging treatment for 672 hours in an atmosphere of 40°C temperature and 65% relative humidity, a natural shrinking rate calculated by the following formula (5) is from 0.1% to 0.6% in the main shrinking direction of the film. The natural shrinking rate is more preferred to be 0.5% or less and further preferred to be 0.4% or less. When the natural shrinking rate in the main shrinking direction (in the widthwise direction of the film) is higher than the above range, there is a

possibility that a width of a rolled product of the film decreases and the width does not match in the processing stage such as printing. Incidentally, although the natural shrinking rate is most preferred to be 0%, only to an extent of 0.1% could be actually achieved in the present invention whereby the lower limit is set to be 0.1%.

$$\text{Natural shrinking rate (\%)} = \{[(\text{Length after aging}) - (\text{Length before aging})] / (\text{Length before aging})\} \times 100 \quad (5)$$

In the heat-shrinkable film of the present invention, it is preferred that, after the film has been subjected to the aging treatment for 672 hours in an atmosphere of 40°C temperature and 65% relative humidity, a tensile elongation at break is 30% or more in the orthogonal direction to the main shrinking direction of the film (lengthwise direction). The tensile elongation at break is more preferred to be 40% or more, and further preferred to be 50% or more. When the tensile elongation at break is less than the above range, there is a possibility that the film is torn due to a tension in the lengthwise direction being loaded upon the printing or processing of the rolled product.

In the heat-shrinkable film of the present invention, its thickness is preferred to be from 10 µm to 50 µm although there is no particular limitation therefor. More preferred lower limit for the thickness is 15 µm.

The heat-shrinkable film of the present invention can be prepared in such a manner that the copolymerized polyester resin of the present invention is subjected to a melt extrusion using an extruder, and then the resulting non-stretched film is subjected to a stretching in the widthwise direction. Incidentally, the copolymerized polyester resin can be produced by polycondensation of the above-mentioned suitable dicarboxylic acid component and diol component by a known method. Usually, copolymerized polyester resin in chips is used as a raw material for the film.

In subjecting the copolymerized polyester resin to the melt extrusion, it is preferred that the copolymerized polyester resin is dried in advance using a drier such as a hopper drier or a paddle drier or using a vacuum drier. After the copolymerized polyester resin is dried as such, it is melted at a temperature of 230 to 270°C using the extruder and is extruded into a film. In conducting such extrusion, it is possible to adopt any of known methods such as a T die method or a tubular method.

When the melted resin in a sheet form after the extrusion is quickly cooled, a non-stretched film can be prepared. As to a method for quick cooling of the melted resin, there may adopted a method wherein the melted resin is cast onto a rotating drum from mouthpieces to quickly solidify whereupon a substantially non-orientated resin sheet is prepared.

By preparing the heat-shrinkable film of the present invention according to the following methods (1) and (2), it is possible to express the properties thereof more advantageously.

(1) Control of conditions for the lateral stretching

In the lateral stretching, the film is previously heated at a temperature of from (Tg + 10°C) to (Tg + 25°C) under such a state that both ends of the film in the widthwise direction are held by clips in a tenter. After that, it is preferred to stretch to an extent of from 3.5 times to 6 times in the widthwise direction together with cooling so as to decrease the temperature to a range from (Tg - 5°C) to (Tg + 9°C). As a result of stretching in the widthwise direction together with cooling, a value of stress ratio [(tensile stress upon final stretching) / (upper yield point stress)] of a stress-strain curve becomes high and it is now possible to decrease the unevenness in thickness in the widthwise direction. After the lateral stretching, it is preferred to subject the film to a heat treatment at a temperature of from (the stretching temperature +1°C) to (the stretching temperature +10°C). When the heat treatment temperature is lower than the stretching temperature, a relaxation of a molecular orientation is insufficient and the natural shrinking rate becomes high whereby it is not preferred. When the heat treatment temperature is higher than (the stretching temperature + 10°C), the shrinking rate in the widthwise direction lowers whereby it is not preferred.

(2) Relax in the widthwise direction after the lateral stretching

In the heat treatment step, it is preferred to relax to an extent of from 0% to 5% in the widthwise direction (0% is without relax) under such a state wherein both ends of the film in the widthwise direction are held by clips in a tenter. As a result of conducting the relax, the shrinking rate in the widthwise direction somewhat lowers but the molecular orientation is subjected to relaxation in the widthwise direction and it is now possible to lower the shrinking stress and the natural shrinking rate. In addition, as a result of conducting the heat treatment at a temperature higher than the stretching temperature in the final heat treatment step, the molecular orientation is subjected to relaxation and it is now possible to lower the shrinking stress and the natural shrinking rate.

The heat-shrinkable label of the present invention is formed using the heat-shrinkable film of the present invention. The packaged product of the present invention is formed in such a manner that the heat-shrinkable label having perforations or notches prepared from the heat-shrinkable film of the present invention is coated at least on a part of an outer periphery of a target to be packaged followed by subjecting to a heat-shrinking treatment. Examples of the target to be packaged include PET bottles for beverages; various kinds of bottles and cans; plastic containers for

confectionery, lunch box, etc.; and boxes made of paper. It is common that, when the target to be packaged is coated by means of heat-shrinking of the label prepared by the heat-shrinkable film, the label is subjected to heat-shrinking to an extent of about 5 to 70% and is closely adhered to the target to be packaged. Incidentally, the label for coating the target to be packaged may be either with print or without print.

With regard to a method for preparing the heat-shrinkable label from the heat-shrinkable film of the present invention, there are a method wherein an organic solvent is applied to an area which is a bit inside from an end of one side of a rectangular film, the film is then immediately made round and the ends thereof are layered and adhered to make into a label, and a method wherein an organic solvent is applied to an area which is a bit inside from an end of one side of a wound film in a roll shape, the film is then immediately made round and the ends thereof are layered and adhered and the resulting tube-shaped one is cut into a label. As to the organic solvent for the adhesion, it is preferred to use a cyclic ether such as 1, 3-dioxorane or tetrahydrofuran. Besides the above, it is also possible to use an aromatic hydrocarbon such as benzene, toluene, xylene or trimethylbenzene; a halogenated hydrocarbon such as methylene chloride or chloroform; a phenol compound such as phenol; and a mixture thereof.

Examples

The present invention will now be more specifically illustrated by way of Examples and Comparative Examples although the present invention is never limited to the embodiments of such Examples but may be appropriately modified within a scope of the gist of the present invention. Incidentally, evaluations of each characteristic property data were done in accordance with the following methods.

Method for analyzing the composition of the copolymerized polyester resin

A sample (5 mg) was dissolved in 0.6 ml of a mixed solution of heavy chloroform and trifluoroacetic acid (ratio by volume: 9/1) . Copolymerized ratios with terephthalic acid, ethylene glycol, neopentyl glycol and diethylene glycol were determined using $^{1}$H-NMR (UNITY 50 manufactured by Varian).

Content of aluminum atom in the copolymerized polyester resin

A sample (0.1 g) was dissolved in a 6M hydrochloric acid solution. The resulting solution was allowed to stand for one day and diluted with pure water so as to give a 1.2M hydrochloric acid solution for the measurement. The content of aluminum atom in the polyester resin was determined based on the prepared solution specimen by a high-frequency plasma emission spectrometry.

Content of phosphorus atom in the copolymerized polyester resin

A phosphoric compound in a sample (1g) was changed to orthophosphoric acid either by a method wherein the sample was subjected to a dry incineration in the co-presence of sodium carbonate or by a method wherein the sample was subjected to a wet decomposition by a mixed liquid of sulfuric acid/nitric acid/perchloric acid or by a mixed liquid of sulfuric acid/aqueous solution of hydrogen peroxide. After that, orthophosphoric acid was reacted with a molybdate in 1 mol/L sulfuric acid solution to as to make into phosphomolybdic acid followed by reducing with hydrazine sulfate whereupon heteropoly blue was prepared. Absorbance thereof at 830 nm wavelength was measured using an absorptiometer (UV-150-02 manufactured by Shimadzu). Amount of phosphorus atom in the sample was determined by using a previously-prepared calibration curve.

Content of antimony atom in the copolymerized polyester resin

A sample (1 g) was subjected to wet decomposition by a mixed liquid of sulfuric acid with an aqueous solution of hydrogen peroxide. After that, sodium nitrite was added thereto so as to change an antimony atom to $Sb^{+5}$ followed by adding Brilliant Green thereto whereby a blue complex with antimony was formed. This complex was extracted with toluene. Absorbance thereof at 620 nm wavelength was measured using an absorptiometer (UV-150-02 manufactured by Shimadzu). Amount of antimony atom in the sample was determined by colorimetry using a previously-prepared calibration curve.

Content of cobalt atom in the copolymerized polyester resin

A sample (1 g) was subjected to incineration using a platinum crucible and 6 mol/L hydrochloric acid was added thereto followed by evaporating to dryness. This was dissolved in 1.2 mol/L hydrochloric acid. An intensity of luminescence

was measured using an ICP emission spectroscopic analysis apparatus (ICPS-2000 manufactured by Shimadzu). Amount of cobalt atom in the sample was determined by using a previously-prepared calibration curve.

Method for measuring the intrinsic viscosity (IV) of the copolymerized polyester resin

A sample (0.1 g) being dried at 60°C for 24 hours was precisely weighed and dissolved in a mixed solvent of 25 mL of phenol/tetrachloroethane (in a ratio of 3/2 by mass). Its intrinsic viscosity was measured at 30°C using an Ostwald viscometer.

Method for measuring the carboxyl end group concentration (AV) in the copolymerized polyester resin

A sample (0.2 g) being dried at 60°C for 24 hours was precisely weighed and its weight at that time was set to be W (g) . To a test tube were added 10 ml of benzyl alcohol and the weighed sample, the test tube was then dipped in an oil bath heated at 205°C and the sample was dissolved therein together with stirring with a glass rod. The sample wherein a dissolving time was set to be 3 minutes, 5 minutes or 7 minutes was referred to as A, B or C, respectively. After that, a test tube was newly prepared, only benzyl alcohol was placed therein and treated under the same process. The sample wherein the dissolving time was set to be 3 minutes, 5 minutes or 7 minutes was referred to as a, b or c, respectively. Titration was conducted using a 0.04 mol/l solution of potassium hydroxide (an ethanolic solution), a factor of which was known already. Phenol Red was used as an indicator. A point wherein a color changed from yellowish green to pink was adopted as an end point, and a titrated amount (ml) of the potassium hydroxide solution was determined. Titrated amounts for the samples A, B and C were referred to as XA, XB and XC (ml), respectively. Titrated amounts for the samples a, b and c were referred to as Xa, Xb and Xc (ml), respectively. The titrated amount V (ml) wherein the dissolving time was 0 minute was determined by a least-squares method using the titrated amount XA, XB or XC for each dissolving time. Similarly, the titrate amount V0 (ml) was determined using Xa, Xb or Xc. After that, AV was determined in accordance with the following formula.

$$AV\ (eq/t) = [(V - V0) \times NF \times 1000] / W$$

NF: factor of 0.04 mol/l potassium hydroxide solution
W: weight of sample (g)

Method for measuring the color b value of the copolymerized polyester resin

The color b value was measured using a colorimetric color-difference meter (ZE-6000 manufactured by Nippon Denshoku) from the tristimulus values XYZ expressing the basic stimulation values of the color. When the value is high, the yellowish tint is strong.

P-NMR spectroscopy

The copolymerized polyester resin in an amount of 270 mg was dissolved in 1.2 mL of a mixed solvent of hexafluoroisopropanol and deuterated benzene (1 : 1) . Then, 7 μL of a 25% deuterated acetone solution of phosphoric acid was added to the resulting solution, and the resulting mixture was subjected to centrifugal separation to give a supernatant liquid. Then, to the supernatant liquid, 95 to 100 mg of trifluoroacetic acid was added and immediately subjected to P-NMR measurement. The measurement method is not limited to the method described above, and any method may be employed as far as it enables the peaks corresponding to the structures in Table 2 to be confirmed.

Apparatus: Fourier transform nuclear magnetic resonance spectrometer (AVANCE 500 manufactured by BRUKER)
$^{31}P$ resonance frequency: 202.456MHz
Lock solvent: deuterated benzene
Flip angle of detection pulse: 65°
Data capturing time: 1.5 seconds
Delay time: 0.5 seconds
Proton decoupling: full
Measurement temperature: 25 to 35°C
Cumulative number of times: about 20000 to 30000

Method for evaluating phosphorus-compound structures in copolymerized polyester resin and heat-shrinkable film

From a spectrum obtained in the P-NMR measurement, a ratio (mol%) of the peak integral value of each phosphorus compound having the structure of the residue A, B, or C to the total of the peak integral values corresponding to all the phosphorus compounds was calculated and expressed by molar percentage (mol%).

From the molar percentage of each of the residues A, B, and C, the molar proportion of the phosphorus compound having the residue A structure was obtained according to the following equation.

Molar proportion of phosphorus compound having residue A structure = residue A (mol%) / [residue B + residue C] (mol%)

Average particle size of silica particles

Using a laser light scattering particle size analyzer (Microtrac HRA model 9320-X100 manufactured by Leeds&Northrup) , the average particle size of silica particles was measured substantially in a water system obtained by diluting an ethylene glycol slurry of the silica particles with water. The diameter at 50% of volume accumulation in the measurement result was defined as an average particle size.

Melt specific resistance (ρi)

Two electrodes (0.6-mm diameter stainless steel wires) were placed in two ends of the polyester resin composition melted at 275°C, and a 2-cm-wide and 0.6-mm-thick uniform layer of the molten polyester resin composition was formed between two 2-cm-wide quartz plates. The layer was measured for electric current (io) at the time of applying a direct-current voltage of 120 V under a temperature condition of 280°C. The measured value was plugged into the following equation so as to obtain a melt specific resistance ρi (Ω·cm).

$$\rho i\ (\Omega \cdot cm) = (A/L) \times (V/io)$$

[A: electrode area ($cm^2$), L: distance between electrodes (cm), V: voltage (V)]

A ($cm^2$) = [width of molten polyester composition layer] × [thickness] = 2 (cm) × 0.06 (cm) . V = 120 (V) . L is a value measured without including the diameters of the electrodes, and is 1.3 cm.

Evaluation of a recycling property of the copolymerized polyester resin

A copolymerized polyester resin being dried at 60°C for 24 hours was poured into a portable kneader (Labo Plastomill 20C200 manufactured by Toyo Seiki) which was previously heated at 280°C, and kneaded for 2 minutes at 60 rpm. After taking out the resin therefrom, it was cut into chips and subjected to the measurement of IV, AV and color b value by the same method as mentioned hereinabove. When the polyester resin satisfied all of such requirements that ΔIV was -0.12 dl/g or more, ΔAV was 14 eq/t or less and Δ (color b value) was 4.0 or less, it was judged that the recycling property was good (expressed as "o") . When the polyester resin did not satisfy the above requirements, it was judged that the recycling property was bad (expressed as "×"). A thermal hysteresis in this evaluation corresponds to a thermal hysteresis in the film preparation. When the recycling property is judged to be good, it is believed that a waste film consisting of such polyester resin can be recycled.

Thermal stability (ΔIV) of copolymerized polyester resin

The copolymerized polyester resin in an amount of 1 g was put into a glass ampule, dried at 60°C for 24 hours, then sealed in the glass ampule at a reduced pressure of 13.3 kPa (in a nitrogen atmosphere), and heat-treated at 300°C for 2 hours. The intrinsic viscosity (IV) of the copolymerized polyester resin was measured before and after the heat treatment. A decrease of the intrinsic viscosity caused by the heating (ΔIV = [IV after heat treatment] - [IV before heat treatment]) was calculated. When ΔIV was more than -0.20 dl/g, the thermal stability was determined to be good (expressed as o), and when ΔIV was -0.20 dl/g or less, the thermal stability was determined to be poor (expressed as ×).

Static friction coefficient (μs) of heat-shrinkable film

For a sample wherein the front and back surfaces of the film were bonded to each other, the static friction

coefficient (μs) was measured in accordance with JIS K-7125, using a tensile tester (manufactured by A & D Company, Limited, TENSILON RTG-1210), in an environment at 23°C and 65% RH.

Heat-shrinking rate (Heat-shrinking rate in hot water) before the aging

A film was cut into squares each being in a size of 10 cm × 10 cm to make a film sample. Then, the sample was immersed for 10 seconds under an unloaded state in hot water of (predetermined temperature) ± 0.5°C for heat-shrinkage, and was then immediately immersed for 10 seconds in water of 25°C ± 0.5°C to stop the shrinkage. After the sample was taken out from water, sizes of the film in longitudinal and lateral directions were measured and the heat-shrinking rate was determined according to the following formula.

Heat-shrinking rate (%) = {[Length before shrinking) - (Length after shrinking)] / (Length before shrinking)] × 100

Heat-shrinking rate after the aging

A film was aged for 672 hours in a chamber for environmental test wherein temperature was 40°C and humidity was 65%. Then, similar to the measurement of the above heat-shrinking rate, sizes of the film in longitudinal and lateral directions were measured and the heat-shrinking rate after the aging was determined according to the above formula.

Shrinking stress before the aging

A film sample in a rectangular shape having a length in the main shrinking direction (in the widthwise direction) of 200 mm and a width of 20 mm was cut out from a film. The shrinking stress of this sample was measured using a measuring machine for strength and elongation (Tesilon Universal Tester PTM-250; registered trade mark of Orientec) equipped with a heating furnace manufactured by Toyo Baldwin (current company name: Orientec). An inner space of the heating furnace of the measuring machine for strength and elongation was previously heated at 90°C. A distance between chucks for holding the film sample was made 100 mm. In attaching the sample to the chucks of the measuring machine for strength and elongation, ventilation to the heating furnace was once stopped and a door of the heating furnace was opened. Each 25 mm of both ends of the sample in 150 mm in the lengthwise direction was sandwiched between the chucks. The distance between the chucks was made 100 mm and fixation without loosening was done so that the lengthwise direction between the chucks and the lengthwise direction of the sample were identical and the sample became horizontal. After the sample was attached to the chucks, the door of the heating furnace was quickly closed and the ventilation was started again. A stage wherein the door of the heating furnace was closed and the ventilation was started again was adopted as a starting point for measuring the shrinking stress. The shrinking stress (MPa) after 30 seconds was determined.

Evaluation for poor label shrinkage after aging

On the heat-shrinkable film, three-color printing was performed in advance, using grass, gold, and white inks manufactured by TOYO INK CO. , LTD. Then, two ends of the printed film was bonded to each other with dioxolane, so as to prepare a cylindrical label (a label wherein the main shrinkage direction of the heat-shrinkable film is oriented to the peripheral direction of the label) . The prepared label was cut. The diameter in the shrinkage direction of the label was 70 mm. Thereafter, the label was heat-shrunk and attached to a 500-ml PET bottle (body diameter: 62 mm, minimum diameter in neck: 25 mm) using a steam tunnel (type: SH-1500-L) manufactured by Fuji Astec Inc. at a transit time of 4 seconds and a zone temperature of 90°C. The attachment was adjusted to position a 30-mm diameter portion of the neck at one end of the label. The evaluation for finishing of the shrunk label was performed by visual inspection. The shrinkage state of the label was evaluated according to the following criteria.

◦: the label is shrunk without slack between the attached label and the container.
×: there is slack between the label and the container due to poor shrinkage.

Evaluation for wrinkles on label after aging

The state of generating wrinkles on the label attached to the container was evaluated according to the following criteria.

◦: There are two or less wrinkles having a size of 2 mm or more.
×: There are three or more wrinkles having a size of 2 mm or more.

Preparation of phosphorus compound

Irganox 1222 (manufactured by BASF SE) as the phosphorus compound and ethylene glycol were charged into a mixing tank and heated at a liquid temperature of 175°C for 2 and a half hours while stirred under a nitrogen purge, so as to prepare an ethylene glycol solution containing 50 g/L of the phosphorus compound.

Method for producing the copolymerized polyester resin

The copolymerized polyester resins referred as raw material resins 1 to 7 were produced by a known method wherein polycondensation was conducted via the following esterification reaction in accordance with reaction conditions and qualities mentioned in Table 3.

Production Example 1: Raw material resins 1 to 5

Into a continuous polyester production apparatus including three continuous esterification reactors and three polycondensation reactors and also including an inline mixer that had a high-speed stirrer and was installed in a transfer line from a third esterification reactor to a first polycondensation reactor, a slurry prepared by mixing terephthalic acid and glycol (ethylene glycol, neopentyl glycol, and diethylene glycol) at a certain ratio (G/T: molar ratio of glycol to terephthalic acid) was continuously supplied, and reacted by a first esterification reactor at a reaction temperature of 256°C and a pressure of 155 kPa, a second esterification reactor at a reaction temperature of 257°C, and the third esterification reactor at a reaction temperature of 257°C, so as to give a low-degree condensate.

The low-condensation product was continuously transferred to a continuous polycondensation apparatus including the three reactors, and subjected to polycondensation by the initial polymerization reactor at a reaction temperature of 261°C, a middle polymerization reactor at a reaction temperature of 272°C and a pressure of 0.58 kPa, and a last polymerization reactor at a reaction temperature of 275°C and a pressure of 0.20 kPa, so as to give a copolymerized polyester resin. The copolymerized polyester resin was extruded into a strand, cooled in water, and then cut into pellets.

From the inline mixer were added an ethylene glycol solution of an aluminum compound (basic aluminum acetate) and the ethylene glycol solution of the phosphorus compound (Irganox 1222) prepared by the above method, such that the remaining amount of each compound after the completion of the polymerization became the amount shown in Table 3 in relation to the mass of the resultant copolymerized polyester resin.

Production Example 2: Raw material resin 6

A copolymerized polyester resin was obtained by the same method as in Production Example 1 except that the reaction temperature of the last polymerization reactor was changed to 285°C in the polymerization method of Production Example 1.

Production Example 3: Raw material resin 7

A copolymerized polyester resin was obtained by the same method as in Production Example 1 except that in place of the ethylene glycol solution of the aluminum compound and the ethylene glycol solution of the phosphorus compound, an antimony compound (antimony trioxide), a cobalt compound (cobalt acetate), and trimethyl phosphate were added in the polymerization method of Production Example 1, such that the remaining amount of each compound after the completion of the polymerization became the amount shown in Table 3 in relation to the mass of the resultant copolymerized polyester resin.

[Table 3]

| Items | | Raw material resin 1 | Raw material resin 2 | Raw material resin 3 | Raw material resin 4 |
|---|---|---|---|---|---|
| Raw material charge | G/T (molar ratio of glycol/terephthalic acid) | 1.85 | 1.85 | 1.85 | 1.85 |

(continued)

| Items | | | Raw material resin 1 | Raw material resin 2 | Raw material resin 3 | Raw material resin 4 |
|---|---|---|---|---|---|---|
| Esterification reaction | first esterification reactor | reaction temperature (°C) | 256 | 256 | 256 | 256 |
| | | reaction pressure (kPa) | 155 | 155 | 155 | 155 |
| | second esterification reactor | reaction temperature (°C) | 257 | 257 | 257 | 257 |
| | third esterification reactor | reaction temperature (°C) | 257 | 257 | 257 | 257 |
| Polycondensation reaction | initial polymerization reactor | reaction temperature (°C) | 261 | 261 | 261 | 261 |
| | middle polymerization reactor | reaction temperature (°C) | 272 | 272 | 272 | 272 |
| | | reaction vacuum degree (kPa) | 0.58 | 0.58 | 0.58 | 0.58 |
| | last polymerization reactor | reaction temperature (°C) | 275 | 275 | 275 | 275 |
| | | reaction vacuum degree (kPa) | 0.20 | 0.20 | 0.20 | 0.20 |
| Compositions of resins (mol%) | terephthalic acid | | 100 | 100 | 100 | 100 |
| | ethylene glycol | | 65 | 61 | 65 | 75 |
| | neopentyl glycol | | 25 | 30 | 20 | 15 |
| | diethylene glycol | | 10 | 9 | 15 | 10 |
| Physical properties of resins | intrinsic viscosity (IV) (dl/g) | | 0.71 | 0.71 | 0.71 | 0.65 |
| Amount of remaining metal (ppm) | aluminum | | 30 | 30 | 30 | 20 |
| | phosphorus | | 77 | 77 | 77 | 92 |
| | antimony | | - | - | - | - |
| | cobalt | | - | - | - | - |
| | molar ratio of phosphorus atom to aluminum atom | | 2.2 | 2.2 | 2.2 | 4.0 |
| Characteristic of resins | Molar proportion of phosphorus compound having residue A structure | | 0.7 | 0.7 | 0.7 | 0.9 |

(continued)

| Items | | | Raw material resin 5 | Raw material resin 6 | Raw material resin 7 |
|---|---|---|---|---|---|
| Raw material charge | G/T (molar ratio of glycol/terephthalic acid) | | 1.85 | 1.85 | 1.85 |
| Esterification reaction | first esterification reactor | reaction temperature (°C) | 256 | 256 | 256 |
| | | reaction pressure (kPa) | 155 | 155 | 155 |
| | second esterification reactor | reaction temperature (°C) | 257 | 257 | 257 |
| | third esterification reactor | reaction temperature (°C) | 257 | 257 | 257 |
| Polycondensation reaction | initial polymerization reactor | reaction temperature (°C) | 261 | 261 | 261 |
| | middle polymerization reactor | reaction temperature (°C) | 272 | 272 | 272 |
| | | reaction vacuum degree (kPa) | 0.58 | 0.58 | 0.58 |
| | last polymerization reactor | reaction temperature (°C) | 275 | 285 | 275 |
| | | reaction vacuum degree (kPa) | 0.20 | 0.20 | 0.20 |
| Compositions of resins (mol%) | terephthalic acid | | 100 | 100 | 100 |
| | ethylene glycol | | 65 | 65 | 65 |
| | neopentyl glycol | | 25 | 25 | 25 |
| | diethylene glycol | | 10 | 10 | 10 |
| Physical properties of resins | intrinsic viscosity (IV) (dl/g) | | 0.71 | 0.71 | 0.71 |
| Amount of remaining metal (ppm) | aluminum | | 30 | 30 | - |
| | phosphorus | | 33 | 77 | 100 |
| | antimony | | - | - | 250 |
| | cobalt | | - | - | 10 |
| | molar ratio of phosphorus atom to aluminum atom | | 1.0 | 2.2 | - |
| Characteristic of resins | Molar proportion of phosphorus compound having residue A structure | | 0.2 | 0.3 | 0 |

Production Example 4: Antiblocking-agent masterbatch

The raw material resin 1 obtained in Production Example 1 and silica particles (manufactured by FUJI SILYSIA CHEMICAL LTD., SYLYSIA 266, average particle size 1.5 μm) as the antiblocking agent were blended at a ratio of 99/1 parts by mass and then melt-kneaded by using a twin screw extruder (manufactured by The Japan Steel Works, Ltd., TEX30α) at a cylinder temperature of 300°C, so as to give an antiblocking-agent masterbatch.

Production Example 5: Electrostatic adherence imparting agent masterbatch

Terephthalic acid, ethylene glycol, and triethyl amine were charged into polymerization equipment including a stirrer, a distillation tower, and a pressure adjustor and subjected to an esterification reaction according to a normal method. Subsequently, basic aluminum acetate, magnesium acetate dihydrate, potassium acetate, and triethyl phosphate were respectively added in an amount of 60 ppm (in terms of aluminum atoms), 1000 ppm (in terms of magnesium atoms), 100 ppm (in terms of potassium atoms), and 660 ppm (in terms of phosphorus atoms) in relation to the theoretical amount of the copolymerized polyester resin. Then, the system was heated to a temperature of 280°C over 1 hour while the pressure of the system was gradually reduced to 150 Pa. A polycondensation reaction was performed for 80 minutes under these conditions. An electrostatic adherence imparting agent masterbatch was thus obtained. The resultant electrostatic adherence imparting agent masterbatch had an IV of 0.5 dl/g and a ρi value of $0.011 \times 10^8$ Ω·cm.

Examples 1 to 3 and Comparative Examples 1 to 6

Comparative Examples 5 and 6 are regarded as examples in terms of the copolymerized polyester resin but as comparative examples in terms of the heat-shrinkable film.

The resultant copolymerized polyester resin and the masterbatch were blended in the amount shown in Table 4, vacuum-dried at 60°C for 48 hours, and then charged into an extruder. The resin was melted at 250°C, extruded from a T-die, and rapidly cooled by winding the resin around a metal rotational roll having the surface thereof cooled to a temperature of 30°C, so as to give an unstretched film having a thickness of 190 μm. The take-up rate (rotation rate of metal roll) of the unstretched film in this process was about 20 m/min. The resultant unstretched film was led to a tenter, preheated at a film surface temperature of 90°C, and then stretched 5 times in the width direction while cooled to a film surface temperature of 73°C. Next, the film was loosened (relaxed) by 5% in the width direction while heated to a film surface temperature of 74°C. Then, the film was cooled, had both edges thereof cut and removed, and wound into a roll having a width of 500 mm. A 40-μm-thick uniaxially stretched film was thereby continuously produced for a prescribed length. The characteristics of the resultant film was evaluated by the methods described above.

Table 4 shows the evaluation results of Examples 1 to 3 and Comparative Examples 1 to 6.

[Table 4]

| Items | | | Example 1 | Example 2 | Example 3 |
|---|---|---|---|---|---|
| Copolymerized polyester resin | Raw material resin | | raw material resin 1 | raw material resin 2 | raw material resin 3 |
| | Compositions of resins (mol%) | terephthalic acid | 100 | 100 | 100 |
| | | ethylene glycol | 65 | 61 | 65 |
| | | neopentyl glycol | 25 | 30 | 20 |
| | | diethylene glycol | 10 | 9 | 15 |
| | Physical properties of resins | intrinsic viscosity (IV) (dl/g) | 0.71 | 0.71 | 0.71 |
| | Amount of remaining metal (ppm) | aluminum | 30 | 30 | 30 |
| | | phosphorus | 77 | 77 | 77 |
| | | antimony | - | - | - |
| | | cobalt | - | - | - |
| | | molar ratio of phosphorus atom to aluminum atom | 2.2 | 2.2 | 2.2 |
| | Characteristics of resins | molar proportion of phosphorus compound having residue A structure | 0.7 | 0.7 | 0.7 |
| | | recycling property | ∘ | ∘ | ∘ |
| | | thermal stability (ΔIV) (dl/g) | ∘ | ∘ | ∘ |
| Resin blend ratio (mass%) | | copolymerized polyester resin | 92.5 | 92.5 | 92.5 |
| | | antiblocking-agent masterbatch | 2.5 | 2.5 | 2.5 |
| | | electrostatic adherence imparting agent masterbatch | 5 | 5 | 5 |

(continued)

| Items | | | Example 1 | Example 2 | Example 3 |
|---|---|---|---|---|---|
| Characteristics of heat shrinkage film | film IV (dl/g) | | 0.66 | 0.66 | 0.66 |
| | molar proportion of phosphorus compound having residue A structure | | 0.7 | 0.7 | 0.7 |
| | melt specific resistance (ρi) (× $10^8$ Ω·cm) | | 0.22 | 0.22 | 0.22 |
| | static friction coefficient (μs) | | 0.6 | 0.6 | 0.6 |
| | before aging | shrinking rate; 70°C (%) | 33 | 37 | 34 |
| | | shrinking stress (MPa) | 4.4 | 3.8 | 2.9 |
| | after aging | shrinking rate; 70°C (%) | 31 | 34 | 33 |
| | | poor label shrinkage | ◦ | ◦ | ◦ |
| | | wrinkles on label | ◦ | ◦ | ◦ |

(continued)

| Items | | | Comparative Example 1 | Comparative Example 2 | Comparative Example 3 |
|---|---|---|---|---|---|
| Copolymerized polyester resin | Raw material resin | | raw material resin 4 | raw material resin 5 | raw material resin 6 |
| | Compositions of resins (mol%) | terephthalic acid | 100 | 100 | 100 |
| | | ethylene glycol | 75 | 65 | 65 |
| | | neopentyl glycol | 15 | 25 | 25 |
| | | diethylene glycol | 10 | 10 | 10 |
| | Physical properties of resins | intrinsic viscosity (IV) (dl/g) | 0.65 | 0.71 | 0.71 |
| | Amount of remaining metal (ppm) | aluminum | 20 | 30 | 30 |
| | | phosphorus | 92 | 33 | 77 |
| | | antimony | - | - | - |
| | | cobalt | - | - | - |
| | | molar ratio of phosphorus atom to aluminum atom | 4.0 | 1.0 | 2.2 |
| | Characteristics of resins | molar proportion of phosphorus compound having residue A structure | 0.9 | 0.2 | 0.3 |
| | | recycling property | × | ∘ | × |
| | | thermal stability (ΔIV) (dl/g) | ∘ | × | × |
| Resin blend ratio (mass%) | | copolymerized polyester resin | 92.5 | 92.5 | 92.5 |
| | | antiblocking-agent masterbatch | 2.5 | 2.5 | 2.5 |
| | | electrostatic adherence imparting agent masterbatch | 5 | 5 | 5 |

(continued)

| Items | | | Comparative Example 1 | Comparative Example 2 | Comparative Example 3 |
|---|---|---|---|---|---|
| Characteristics of heat shrinkage film | film IV (dl/g) | | 0.61 | 0.63 | 0.66 |
| | molar proportion of phosphorus compound having residue A structure | | 0.9 | 0.2 | 0.3 |
| | melt specific resistance (ρi) (× $10^8$ Ω·cm) | | 0.22 | 0.22 | 0.22 |
| | static friction coefficient (μs) | | 0.6 | 0.6 | 0.6 |
| | before aging | shrinking rate; 70°C (%) | 33 | 33 | 33 |
| | | shrinking stress (MPa) | 4.4 | 4.4 | 4.4 |
| | after aging | shrinking rate; 70°C (%) | 31 | 32 | 27 |
| | | poor label shrinkage | ◦ | × | ◦ |
| | | wrinkles on label | × | ◦ | ◦ |

(continued)

| Items | | | Comparative Example 4 | Comparative Example 5 | Comparative Example 6 |
|---|---|---|---|---|---|
| Copolymerized polyester resin | Raw material resin | | raw material resin 7 | raw material resin 1 | raw material resin 1 |
| | Compositions of resins (mol%) | terephthalic acid | 100 | 100 | 100 |
| | | ethylene glycol | 65 | 65 | 65 |
| | | neopentyl glycol | 25 | 25 | 25 |
| | | diethylene glycol | 10 | 10 | 10 |
| | Physical properties of resins | intrinsic viscosity (IV) (dl/g) | 0.71 | 0.71 | 0.71 |
| | Amount of remaining metal (ppm) | aluminum | - | 30 | 30 |
| | | phosphorus | 100 | 77 | 77 |
| | | antimony | 250 | - | - |
| | | cobalt | 10 | - | - |
| | | molar ratio of phosphorus atom to aluminum atom | - | 2.2 | 2.2 |
| | Characteristics of resins | molar proportion of phosphorus compound having residue A structure | 0 | 0.7 | 0.7 |
| | | recycling property | × | ○ | ○ |
| | | thermal stability (ΔIV) (dl/g) | × | ○ | ○ |
| Resin blend ratio (mass%) | | copolymerized polyester resin | 92.5 | 97.5 | 95 |
| | | antiblocking-agent masterbatch | 2.5 | 2.5 | 0 |
| | | electrostatic adherence imparting agent masterbatch | 5 | 0 | 5 |

(continued)

| Items | | | Comparative Example 4 | Comparative Example 5 | Comparative Example 6 |
|---|---|---|---|---|---|
| Characteristics of heat shrinkage film | film IV (dl/g) | | 0.61 | 0.66 | 0.66 |
| | molar proportion of phosphorus compound having residue A structure | | 0 | 0.7 | 0.7 |
| | melt specific resistance (ρi) (× $10^8$ Ω·cm) | | 0.22 | 3.5 | 0.22 |
| | static friction coefficient (μs) | | 0.6 | 0.6 | >1 |
| | before aging | shrinking rate; 70°C (%) | 32 | 33 | 34 |
| | | shrinking stress (MPa) | 4.4 | 4.4 | 4.3 |
| | after aging | shrinking rate; 70°C (%) | 30 | 30 | 30 |
| | | poor label shrinkage | ◦ | ◦ | ◦ |
| | | wrinkles on label | ◦ | ◦ | × |

The heat-shrinkable films obtained in Examples were all high-quality. On the other hand, Comparative Examples are poor in specific characteristics and were low-quality. As to the recyclability of the copolymerized polyester resin, Comparative Examples 1, 3, and 4 did not satisfy ΔIV. The copolymerized polyester resins of Comparative Examples 5 and 6 were excellent in recyclability and thermal stability similarly to the copolymerized polyester resins of Examples.

Industrial Applicability

According to the copolymerized polyester resin of the present invention, the film-preparation cost can be reduced while ensuring the film-preparation property and the film strength. In the heat-shrinkable film using the copolymerized polyester resin of the present invention, a decrease in the heat-shrinking rate after the aging is small, in spite of the fact of having the high heat-shrinking rate. Accordingly, it can be advantageously used as a label. The packaged product such as a container wherein the heat-shrinkable polyester-based film of the present invention is used as a label exhibits a beautiful appearance. Also, in the copolymerized polyester resin of the present invention, it is possible to suppress the deterioration of physical properties upon the film preparation of a heat-shrinkable film. Moreover, it is possible to recycle a film which was once made into a waste at a high rate.

## Claims

1. A copolymerized polyester resin which contains dicarboxylic acid and diol as constituting components, wherein the copolymerized polyester resin contains terephthalic acid as a main component of a dicarboxylic acid component, and contains ethylene glycol as a main component of a diol component, wherein a content of neopentyl glycol is from 18 to 32% by mole and a content of diethylene glycol is from 7 to 15% by mole when a total amount of the whole diol component is taken as 100% by mole, and wherein a molar proportion of each phosphorus compound contained in the copolymerized polyester resin and having a structure of the following residue A, the following residue B, or the following residue C satisfies the following inequality (1) .

(1) Residue A (mol%)/[residue B + residue C] (mol%) > 0.5

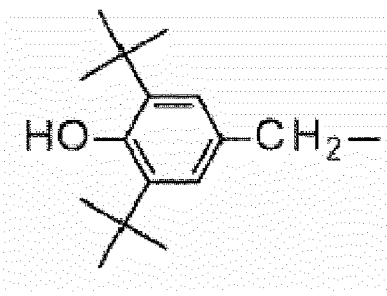
(residue A)

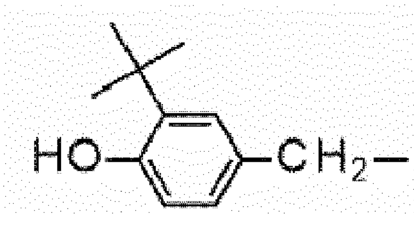
(residue B)

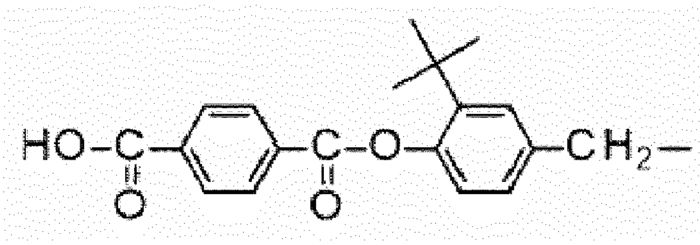
(residue C)

2. The copolymerized polyester resin according to claim 1, wherein the copolymerized polyester resin contains aluminum atom and phosphorus atom, wherein a content of the aluminum atom in the copolymerized polyester resin is 15 to 40 ppm and wherein a molar ratio of the phosphorus atom to the aluminum atom in the copolymerized polyester resin is 1.8 to 2.6.

3. A method for producing the copolymerized polyester resin according to claim 1 or 2, wherein an aluminum compound and 3,5-di-tert-butyl-4-hydroxybenzylphosphonic acid-based compound are used as catalysts.

4. The method for producing the copolymerized polyester resin according to claim 3, wherein the copolymerized polyester resin is produced by a continuous polymerization method, and wherein the temperature of a final polymerization tank is set to 270 to 280°C in a production process.

5. A heat-shrinkable film containing a copolymerized polyester resin, an antiblocking agent and an electrostatic adherence imparting agent, wherein the copolymerized polyester resin contains terephthalic acid as a main component of a dicarboxylic acid component, and contains ethylene glycol as a main component of a diol component, wherein a content of neopentyl glycol is from 18 to 32% by mole and a content of diethylene glycol is from 7 to 15% by mole when a total amount of the whole diol component is taken as 100% by mole, and wherein a molar proportion of each phosphorus compound contained in the heat-shrinkable film and having a structure of the following residue A, the following residue B, or the following residue C satisfies the following inequality (1).

(1) Residue A (mol%)/[residue B + residue C] (mol%) > 0.5

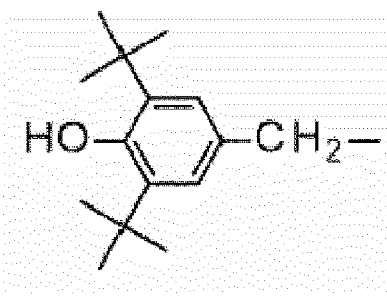

(residue A)

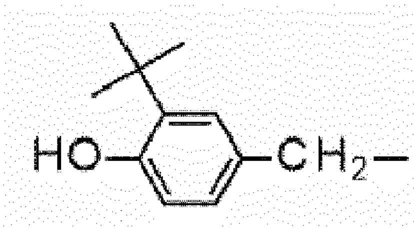

(residue B)

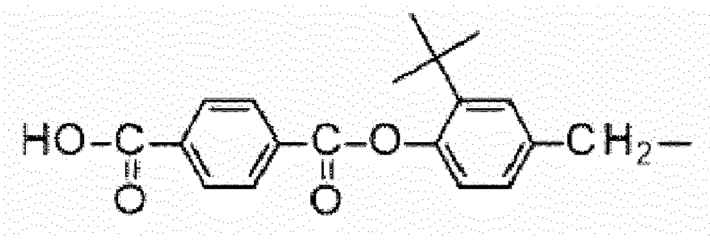

(residue C)

6. A heat-shrinkable film which is **characterized in** being made of a polyester resin composition containing the copolymerized polyester resin according to claim 1 or 2, an antiblocking agent, and an electrostatic adherence imparting agent.

7. A heat-shrinkable label which is **characterized in** being prepared by using the heat-shrinkable film according to claim 5 or 6.

8. A packaged product which is **characterized in** being formed by coating the heat-shrinkable label according to claim 7 at least on a part of an outer periphery of a target to be packaged followed by subjecting to a heat-shrinking treatment.

## Patentansprüche

1. Copolymerisiertes Polyesterharz, das Dicarbonsäure und Diol als konstituierende Komponenten enthält, wobei das copolymerisierte Polyesterharz Terephthalsäure als Hauptkomponente einer Dicarbonsäurekomponente enthält und Ethylenglykol als Hauptkomponente einer Diolkomponente enthält, wobei ein Gehalt an Neopentylglykol von 18 bis 32 Mol-% und ein Gehalt an Diethylenglykol von 7 bis 15 Mol-% beträgt, wenn die Gesamtmenge aller Diolkomponenten als 100 Mol-% angenommen wird, und wobei ein molarer Anteil jeder Phosphorverbindung, die in dem copolymerisierten Polyesterharz enthalten ist und eine Struktur des folgenden Restes A, des folgenden Restes B oder des folgenden Restes C aufweist, die folgende Ungleichung (1) erfüllt.

$$(1)\ \text{Rest A (mol\%)} / [\text{Rest B} + \text{Rest C}]\ (\text{mol\%}) > 0{,}5$$

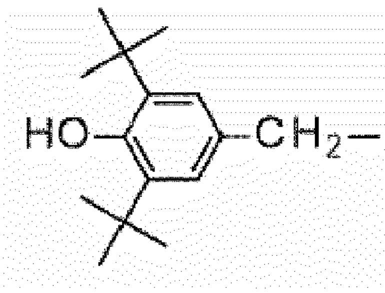

**(Rest A)**

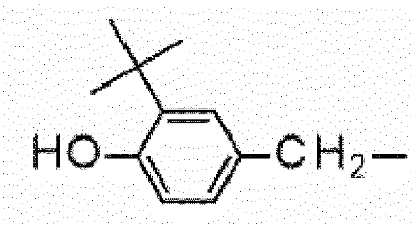

**(Rest B)**

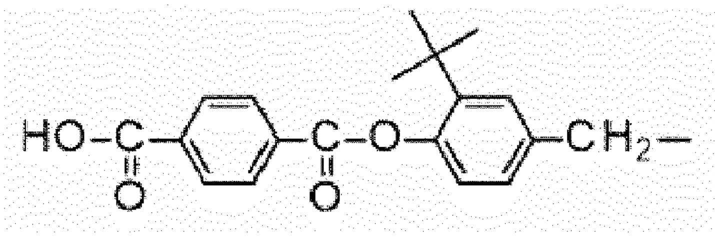

**(Rest C)**

2. Copolymerisiertes Polyesterharz nach Anspruch 1, wobei das copolymerisierte Polyesterharz ein Aluminiumatom und ein Phosphoratom enthält, wobei ein Gehalt des Aluminiumatoms in dem copolymerisierten Polyesterharz 15 bis 40 ppm beträgt und wobei ein molares Verhältnis des Phosphoratoms zu dem Aluminiumatom in dem copolymerisierten Polyesterharz 1,8 bis 2,6 beträgt.

3. Verfahren zur Herstellung des copolymerisierten Polyesterharzes nach Anspruch 1 oder 2, wobei eine Aluminiumverbindung und eine Verbindung auf Basis von 3,5-Di-tert-butyl-4-hydroxybenzylphosphonsäure als Katalysatoren verwendet werden.

4. Verfahren zur Herstellung des copolymerisierten Polyesterharzes nach Anspruch 3, wobei das copolymerisierte Polyesterharz durch ein kontinuierliches Polymerisationsverfahren hergestellt wird und wobei die Temperatur eines Endpolymerisationstanks in einem Produktionsprozess auf 270 bis 280°C eingestellt wird.

5. Wärmeschrumpfbare Folie, enthaltend ein copolymerisiertes Polyesterharz, ein Antiblockiermittel und ein elektrostatisches Haftvermittlungsmittel, wobei das copolymerisierte Polyesterharz Terephthalsäure als Hauptkomponente einer Dicarbonsäurekomponente und Ethylenglykol als Hauptkomponente einer Diolkomponente enthält, wobei ein Gehalt an Neopentylglykol von 18 bis 32 Mol-% und ein Gehalt von Diethylenglykol 7 bis 15 Mol-% beträgt, wenn die Gesamtmenge aller Diolkomponenten als 100 Mol-% angenommen wird, und wobei ein molarer Anteil jeder Phosphorverbindung, die in der wärmeschrumpfbaren Folie enthalten ist und eine Struktur des folgenden Restes A, des folgenden Restes B oder des folgenden Restes C aufweist, die folgende Ungleichung (1) erfüllt.

(1) Rest A (mol%) / [Rest B + Rest C] (mol%) > 0,5

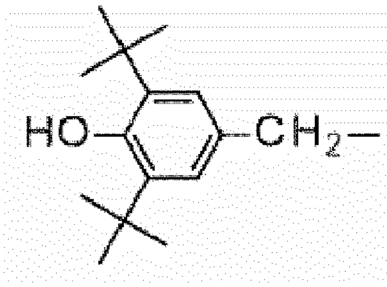

**(Rest A)**

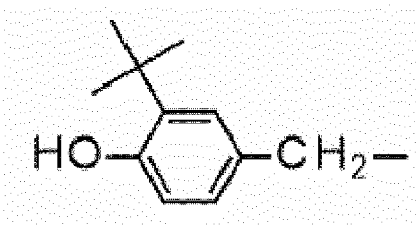

**(Rest B)**

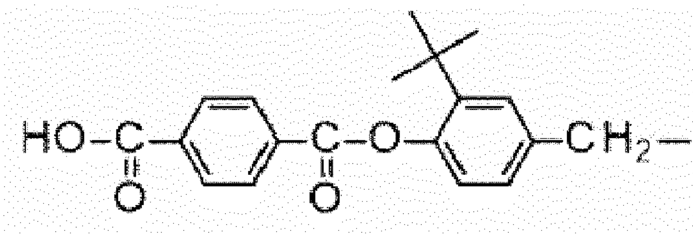

**(Rest C)**

6. Wärmeschrumpfbare Folie, die **dadurch gekennzeichnet ist, dass** sie aus einer Polyesterharzzusammensetzung, enthaltend das copolymerisierte Polyesterharz nach Anspruch 1 oder 2, ein Antiblockiermittel und ein elektrostatisches Haftvermittlungsmittel, hergestellt ist.

7. Wärmeschrumpfbares Etikett, das **dadurch gekennzeichnet ist, dass** es unter Verwendung der wärmeschrumpfbaren Folie nach Anspruch 5 oder 6 hergestellt ist.

8. Verpacktes Produkt, das **dadurch gekennzeichnet ist, dass** es durch Aufbringen des wärmeschrumpfbaren Etiketts nach Anspruch 7 auf mindestens einen Teil des Außenumfangs eines zu verpackenden Objekts und anschließende Wärmeschrumpfung hergestellt ist.

## Revendications

1. Résine de polyester copolymérisée qui contient un acide dicarboxylique et un diol en tant que composants constitutifs, dans laquelle la résine de polyester copolymérisée contient de l'acide téréphtalique en tant que composant principal d'un composant d'acide dicarboxylique, et contient de l'éthylène glycol en tant que composant principal d'un composant de diol, dans laquelle une teneur en néopentyle glycol va de 18 à 32 % en mole et une teneur en diéthylène glycol va de 7 à 15 % en mole lorsqu'une quantité totale du composant de diol entier est prise comme 100 % en mole, et dans laquelle une proportion molaire de chaque composé de phosphore contenu dans la résine de polyester copolymérisée et ayant une structure du résidu suivant A, du résidu suivant B ou du résidu suivant C satisfait l'inégalité suivante (1).

(1) Résidu (A) (% en mole)/[résidu B + résidu C] (% en mole) > 0,5

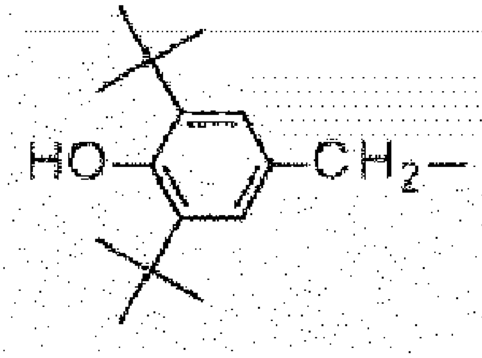

(résidu A)

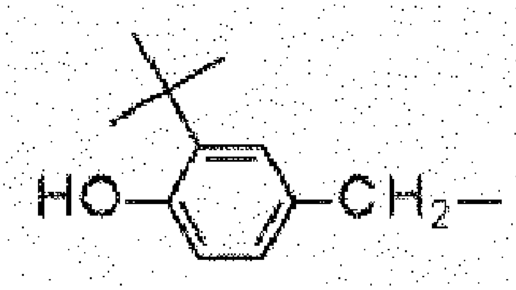

(résidu B)

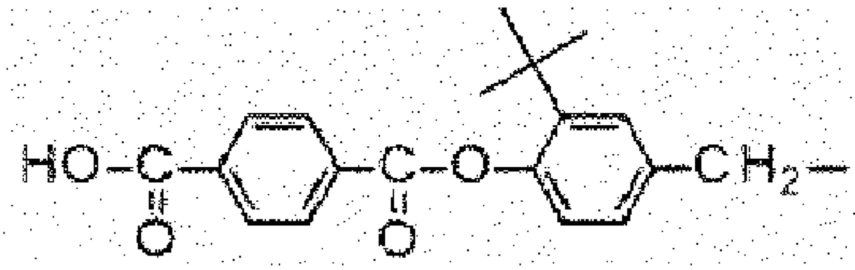

(résidu C)

2. Résine de polyester copolymérisée selon la revendication 1, dans laquelle la résine de polyester copolymérisée contient un atome d'aluminium et un atome de phosphore, dans laquelle une teneur en l'atome d'aluminium dans la résine de polyester copolymérisée est de 15 à 40 ppm et dans laquelle un rapport molaire de l'atome de phosphore sur l'atome d'aluminium dans la résine de polyester copolymérisée est de 1,8 à 2,6.

3. Procédé de production de la résine de polyester copolymérisée selon la revendication 1 ou 2, dans lequel un composé d'aluminium et un composé à base d'acide 3,5-di-tert-butyl-4-hydroxybenzylphosphonique sont utilisés en tant que catalyseurs.

4. Procédé de production de la résine de polyester copolymérisée selon la revendication 3, dans lequel la résine de polyester copolymérisée est produite par un procédé de polymérisation continu, et dans lequel la température d'un réservoir de polymérisation finale est réglée sur 270 à 280 °C dans un processus de production.

5. Film thermorétractable contenant une résine de polyester copolymérisée, un agent anti-blocant et un agent conférant une adhérence électrostatique, dans lequel la résine de polyester copolymérisée contient de l'acide téréphtalique

en tant que composant principal d'un composant d'acide dicarboxylique, et contient de l'éthylène glycol en tant que composant principal d'un composant de diol, dans lequel une teneur en néopentyle glycol va de 18 à 32 % en mole et une teneur en diéthylène glycol va de 7 à 15 % en mole lorsqu'une quantité totale du composant de diol entier est prise comme 100 % en mole, et dans lequel une proportion molaire de chaque composé de phosphore contenu dans le film thermorétractable et ayant une structure du résidu suivant A, du résidu suivant B ou du résidu suivant C satisfait l'inégalité suivante (1).

(1) Résidu (A) (% en mole)/[résidu B + résidu C] (% en mole) > 0,5

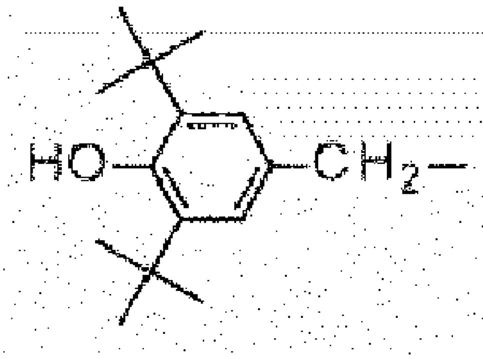

(résidu A)

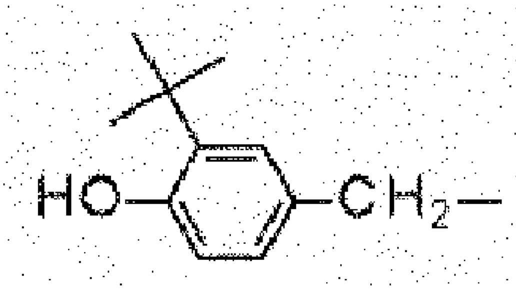

(résidu B)

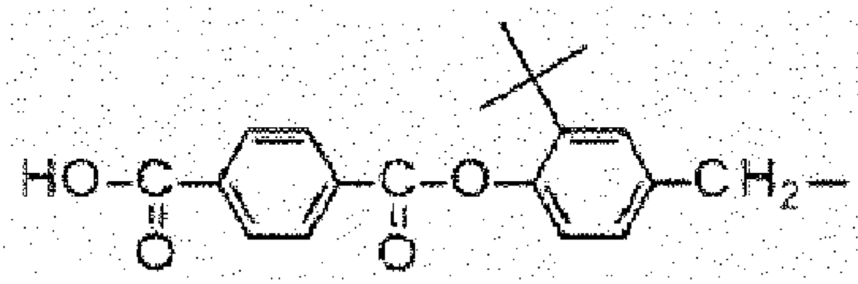

(résidu C)

6. Film thermorétractable qui est **caractérisé par** le fait d'être réalisé en une composition de résine de polyester contenant la résine de polyester copolymérisée selon la revendication 1 ou 2, un agent anti-blocant et un agent conférant une adhérence électrostatique.

7. Étiquette thermorétractable qui est **caractérisée par** le fait d'être préparée en utilisant le film thermorétractable selon la revendication 5 ou 6.

8. Produit emballé qui est **caractérisé par** le fait d'être formé en revêtant l'étiquette thermorétractable selon la revendication 7 au moins sur une partie d'une périphérie externe d'une cible devant être emballée, suivi de la soumission à un traitement de thermorétraction.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5033895 B
- JP 4411556 B
- JP 5249997 B
- JP 6607473 B
- US 9868815 B2